# EUROPEAN PATENT APPLICATION

(11) **EP 4 446 285 A1**
(43) Date of publication of application: **16.10.2024**
(21) Application number: 24165463.1
(22) Date of filing: 22.03.2024
(51) Int. Cl.: C01G 53/04, H01M 4/525

(54) **CATHODE ACTIVE MATERIAL FOR LITHIUM SECONDARY BATTERY, METHOD OF PREPARING THE SAME, CATHODE FOR LITHIUM SECONDARY BATTERY INCLUDING THE SAME, AND LITHIUM SECONDARY BATTERY INCLUDING CATHODE**

(30) Priority: 24.03.2023 KR 20230039278
(71) Applicant: Samsung SDI Co., Ltd., Yongin-si, Gyeonggi-do 17084 (KR)
(72) Inventor: KANG, Byungwuk, 17084 Yongin-si (KR); YOU, Yongchan, 17084 Yongin-si (KR); LEE, Dookyun, 17084 Yongin-si (KR); LEE, Jangwook, 17084 Yongin-si (KR); CHOI, Seungyeon, 17084 Yongin-si (KR); KIM, Soohyeon, 17084 Yongin-si (KR)
(74) Representative: Marks & Clerk LLP

(57) **Abstract**

A cathode active material, a method of preparing the same, a cathode including the same, and a lithium secondary battery including a cathode including the same are provided. The cathode active material includes nickel-based lithium metal oxide monolithic particles, the nickel-based lithium metal oxide monolithic particles having an average size of about 1 µm to about 4 µm, and a cobalt compound-containing coating layer on surfaces of the nickel-based lithium metal oxide monolithic particles, wherein the nickel-based lithium metal oxide monolithic particles are doped with molybdenum.

## Description

### BACKGROUND

### 1. Field

One or more embodiments relate to a cathode active material for a lithium secondary battery, a method of preparing the same, a cathode for a lithium secondary battery including the same, and a lithium secondary battery including the cathode.

### 2. Description of the Related Art

As portable electronic devices, communication devices, and/or the like advance, there is a great desire (and/or need) to develop lithium secondary batteries with high energy density. However, lithium secondary batteries having high energy density may have reduced safety, and thus improvement in this regard is desired and/or needed.

To manufacture lithium secondary batteries having a long lifespan and reduced gas generation, the utilization of a single-crystal cathode active material as a cathode active material of a lithium secondary battery is being considered. Single-crystal cathode active materials may have problems in that particle agglomeration may occur or productivity may be reduced due to heat treatment at high temperatures for single crystallization (*e.g.*, crystallization of single crystals).

Single-crystal cathode active materials exhibit relatively low discharge capacity and charge/discharge efficiency as compared to polycrystalline cathode active materials, and thus improvement in this regard is desired and/or required.

### SUMMARY

Aspects of one or more embodiments relate to a novel cathode active material for a lithium secondary battery.

Aspects of one or more embodiments relate to a method of preparing the above-described cathode active material.

Aspects of one or more embodiments relate to a cathode having improved discharge capacity and charge/discharge efficiency by including the above-described cathode active material.

Aspects of one or more embodiments relate to a lithium secondary battery including the above-described cathode.

Additional aspects will be set forth in part in the description which follows and, in part, will be apparent from the description, or may be learned by practice of the presented embodiments of the disclosure.

According to one or more embodiments of the present disclosure, a cathode active material for a lithium secondary battery includes nickel-based lithium metal oxide monolithic particles, the nickel-based lithium metal oxide monolithic particles having a size (e.g., an average size, such as D50) of about 1 µm to about 4 µm, and a cobalt compound-containing coating layer on (e.g. disposed on) surfaces of the nickel-based lithium metal oxide monolithic particles, wherein the nickel-based lithium metal oxide monolithic particles are doped with molybdenum.

In one or more embodiments, a content (e.g., amount) of the molybdenum may be in a range of at least about 0.1 mol% and at most (e.g., less than) about 1.0 mol% with respect to a total content of metals other than lithium in the cathode active material.

In one or more embodiments, a content (e.g., amount) of a cobalt compound in the cobalt compound-containing coating layer may be in a range of about 0.1 mol% to about 5.0 mol% with respect to a total amount of the cathode active material (*e.g*., 100 mol%), and/or the cobalt compound-containing coating layer may have a thickness (e.g. an average thickness) of about 1 nm to about 50 nm.

In one or more embodiments, the cobalt compound in the cobalt compound-containing coating layer may include cobalt oxide, lithium cobalt oxide, or a combination thereof.

In one or more embodiments, the cobalt compound-containing coating layer may further include at least one of (*e.g.*, at least one selected from among) boron, manganese, phosphorus, aluminium, zinc, zirconium, and/or titanium.

In one or more embodiments, the nickel-based lithium metal oxide monolithic particles may be a compound represented by Formula 1:

Formula 1 Liₐ(Ni_{1-x-y}M1ₓM2_{y})O_{2±α1}

wherein, in Formula 1, M1 may be at least one element of (*e.g.,* at least one element selected from among) Co, Mn, and/or Al, M2 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.95≤a≤1.1, 0.6≤(1-x-y)<1, 0≤x<0.4, 0≤y<0.4, and 0≤α1≤0.1, wherein a case where both x and y are 0 at the same time is excluded.

In one or more embodiments, the nickel-based lithium metal oxide monolithic particles may be a compound represented by Formula 2:

Formula 2 Liₐ(Ni_{1-x-y-z}CoₓM3_{y}M4_{z})O_{2±α1}

wherein, in Formula 2, M3 may be at least one element of (*e.g.,* at least one element selected from among) Mn and/or Al, M4 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.95≤a≤1.1, 0.6≤(1-x-y-z)<1, 0≤x<0.4, 0≤y<0.4, 0≤z<0.4, and 0≤α1≤0.1, wherein a case where all of x, y, and z are 0 at the same time is excluded.

In one or more embodiments, FWHM_{(003)/}FWHM₍₁₀₄₎ of the cathode active material, as measured by X-ray diffraction analysis, may be in a range of about 0.72 to about 0.79, wherein FWHM₍₀₀₃₎ refers to the full with at half maximum (FWHM) of a peak corresponding to the (003) plane, and FWHM ₍₁₀₄₎ refers to the full with at half maximum of a peak corresponding to the (104) plane..

According to one or more embodiments, a method of preparing a cathode active material for a lithium secondary battery includes mixing a nickel precursor, at least one of (*e.g.,* at least one selected from among) an M1 precursor and/or an M2 precursor, and a basic solution to obtain a first mixture, and coprecipitating the first mixture in a coprecipitation reaction, followed by drying, to obtain a nickel-based metal precursor having pores therein, mixing the nickel-based metal precursor having pores therein and a lithium precursor to obtain a second mixture, adding a molybdenum precursor to the second mixture and heating the second mixture with a primary heat treatment to obtain a first product, pulverizing the first product utilizing a pulverization process to obtain a second product in a form of small monolithic particles, and adding a cobalt precursor to the second product to obtain a third mixture, and heating the third mixture with a secondary heat treatment, wherein the primary heat treatment is performed at a higher temperature than the secondary heat treatment, the M1 precursor is at least one of (*e.g.,* at least one selected from among) a cobalt precursor, a manganese precursor, and/or an aluminium precursor, and the M2 precursor is a precursor containing at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr).

In one or more embodiments, a pore region inside the nickel-based metal precursor may have a size (*e.g.,* an average size, such as D50) of about 2 µm to about 7 µm, and/or the cobalt precursor may comprise Co(OH)₂, CoOOH, CoO, Co₂O₃, Co₃O₄, Co(OCOCH₃)₂·4H₂O, CoCl₂, Co(NO₃)₂·6H₂O, CoSO₄, Co(SO₄)₂·7H₂O, or a combination thereof.

In one or more embodiments, the nickel-based metal precursor may be a compound represented by Formula 3, a compound represented by Formula 4, or a combination thereof:

Formula 3 (Ni_{1-x-y}M1ₓM2_{y})(OH)₂

wherein, in Formula 3, M1 may be at least one element of (*e.g.,* at least one element selected from among) Co, Mn, and/or Al, M2 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y)<1, 0≤x<0.4, and 0≤y<0.4, wherein a case where both x and y are 0 at the same time is excluded,

Formula 4 (Ni_{1-x-y}M1ₓM2_{y})O

wherein, in Formula 4, M1 may be at least one element of (*e.g.,* at least one selected from among) Co, Mn, and/or Al, M2 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y)<1, 0≤x<0.4, and 0≤y<0.4, wherein a case where both x and y are 0 at the same time is excluded.

In one or more embodiments, the nickel-based metal precursor may be a compound of Formula 5, a compound of Formula 6, or a combination thereof:

Formula 5 Ni_{1-x-y-z}CoₓM3_{y}M4_{z}(OH)₂

wherein, in Formula 5, M3 may be at least one element of (*e.g.,* at least one element selected from among) Mn and/or Al, M4 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y-z)<1, 0≤x<0.4, 0≤y<0.4, and 0≤z<0.4, wherein a case where all of x, y, and z are 0 at the same time is excluded,

Formula 6 (Ni_{1-x-y-z}CoₓM3_{y}M4_{z})O

wherein, in Formula 6, M3 may be at least one element of (*e.g.,* at least one element selected from among) Mn and/or Al, M4 may be at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y-z)<1, 0≤x<0.4, 0≤y<0.4, and 0≤z<0.4, wherein a case where all of x, y, and z are 0 at the same time is excluded.

In one or more embodiments, the nickel-based metal precursor and the lithium precursor may be mixed such that a molar ratio of Li/Me (a metal other than Li) is at least about 0.9 and at most (e.g., less than) about 1.1, and/or the lithium precursor may comprise lithium hydroxide, lithium carbonate, lithium sulfate, lithium nitrate, or a combination thereof.

In one or more embodiments, the primary heat treatment may be performed at about 800 °C to about 1200 °C in an oxidizing gas atmosphere, and/or the secondary heat treatment may be performed at about 600 °C to about 850 °C in an oxidizing gas atmosphere.

According to one or more embodiments of the present disclosure, a cathode for a lithium secondary battery includes a cathode current collector and a cathode active material layer on the cathode current collector, wherein the cathode active material layer includes the cathode active material as described above.

According to one or more embodiments of the present disclosure, a lithium secondary battery includes the cathode as described above, an anode, and an electrolyte between the cathode and the anode.

At least some of the above and other features of the invention are set out in the claims.

### BRIEF DESCRIPTION OF THE DRAWINGS

The above and other aspects, features, and/or principles of certain embodiments of the disclosure will be more apparent from the following description taken in conjunction with the accompanying drawings, in which:
FIG. 1A is a schematic view of a cross-sectional structure of a product having a single-layered structure obtained after a primary heat treatment in preparation of a cathode active material according to one or more embodiments of the present disclosure;
FIG. 1B is a schematic view of the cross-sectional structure of a product having a double-layered structure obtained after primary heat treatment in preparation of a cathode active material according to one or more embodiments of the present disclosure;
FIG. 1C is a scanning electron microscope image illustrating the cross-sectional structure of a product obtained after primary heat treatment in preparation of a cathode active material according to Example 1;
FIGs. 2A - 2C are scanning electron microscope images of the surface of a primary heat treatment product in preparation of the cathode active material of Example 1;
FIGs. 2D and 2E are scanning electron microscope images of the surface of the cathode active material of Example 1;
FIGs. 3A - 3C are scanning electron microscope images of the surface of a primary heat treatment product in preparation of a cathode active material of Example 2;
FIGs. 3D and 3E are scanning electron microscope images of the surface of the cathode active material of Example 2;
FIGs. 4A - 4C are scanning electron microscope images of the surface of a primary heat treatment product in preparation of a cathode active material of Example 3;
FIGs. 4D and 4E are scanning electron microscope images of the surface of the cathode active material of Example 3;
FIGs. 5A - 5C are scanning electron microscope images of the surface of a primary heat treatment product in preparation of a cathode active material of Reference Example 1;
FIGs. 5D and 5E are scanning electron microscope images of the surface of a cathode active material of Reference Example 1;
FIG. 6 is a scanning electron microscope image showing the results of an analysis of a nickel-based metal precursor of Preparation Example 1;
FIG. 7 is a graph showing the particle size distribution characteristics of cathode active materials of Examples 1 to 3 and Reference Example 1;
FIG. 8A shows changes in capacity according to voltage in coin cells of Manufacture Examples 1 to 3 and Reference Manufacture Examples 1 and 2;
FIG. 8B shows changes in capacity according to voltage in coin cells of Manufacture Examples 1 to 3 and Reference Manufacture Examples 1 and 2 were charged;
FIG. 9 is a graph showing the capacity retention rates of the coin cells of Manufacture Examples 1 to 3; and
FIG. 10 is an exploded perspective view of a lithium secondary battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, duplicative descriptions thereof may not be provided.

As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

Hereinafter, a cathode active material for a lithium secondary battery according to one or more embodiments, a method of preparing the same, a cathode including the same, and a lithium secondary battery including the cathode will be described in more detail.

To manufacture a lithium secondary battery with improved lifespan characteristics, a cathode including a single-crystal cathode active material is utilized. The preparation of a single-crystal cathode active material involves a high-temperature heat treatment process by adding an excess amount of lithium. Due to the high-temperature heat treatment, particles agglomerate or productivity is reduced and residual lithium increases. In one or more embodiments, when a lithium secondary battery is manufactured using such a single-crystal cathode active material, capacity and charge/discharge efficiency are reduced.

Single-crystal cathode active materials undergo particle agglomeration, and thus are required to go through a pulverization process when a cathode is manufactured. When general single-crystal cathode active materials are subjected to such a pulverization process, the single-crystal properties of the cathode active materials are deteriorated, residual pulverized products are generated, and surface resistance thereof is high.

Therefore, the present disclosure addresses the above-described problems by providing a cathode active material with enhanced surface resistance properties in which, after secondary heat treatment, even when the pulverization process is performed, there is hardly any deterioration (*e.g.,* deterioration is reduced) in the crystallinity of the cathode active material or surface defects are hardly generated (*e.g*., surface defects are generated in reduced quantities).

A cathode active material for a lithium secondary battery, according to one or more embodiments, includes: nickel-based lithium metal oxide monolithic particles, the monolithic particles having a size (e.g. an average size, such as D50) of about 1 µm to about 4 µm; and a cobalt compound-containing coating layer on surfaces of the nickel-based lithium metal oxide monolithic particles (*e.g*., on a surface of each of the of the nickel-based lithium metal oxide monolithic particles), in which the nickel-based lithium metal oxide monolithic particles are doped with molybdenum.

The term "a monolithic particle" or "monolithic particles" as used herein refers to a structure in which, in terms of morphology, particles exist as independent phases in which particles do not aggregate with each other, and the particles have a size (e.g. an average size, such as D50) of about 1 µm to about 4 µm, for example, about 2 µm to about 4 µm. In the present disclosure, monolithic particles have improved structural and morphological stability, and can be mass-produced. In one or more embodiments, when a cathode including the cathode active material is utilized, a lithium secondary battery having enhanced safety and enhanced capacity and charge/discharge efficiency may be manufactured.

The term "size" or "diameter" as used herein refers to an average particle diameter when particles are spherical and refers to an average major axis length when particles are non-spherical. For example, in the present disclosure, when particles are spherical, "diameter" indicates a particle diameter or an average particle diameter, and when the particles are non-spherical, the "diameter" indicates a major axis length or an average major axis length.

The diameter (or size) of the particles may be measured utilizing a scanning electron microscope or a particle size analyzer. The particle size analyzer may be, for example, a HORIBA, LA-950 laser particle size analyzer. When the size of the particles is measured utilizing a particle size analyzer, the average particle diameter (or size) is referred to as D50. D50 refers to the average diameter (or size) of particles whose cumulative volume corresponds to 50 vol% in a particle size distribution (*e.g*., cumulative distribution), and refers to a value of the particle size corresponding to 50% from the smallest particle when the total number of particles is 100% in the distribution curve accumulated in the order of the smallest particle size to the largest particle size.

When the size of the particles is measured utilizing a scanning electron microscope, the size of the particles is determined by the average value of 30 or more randomly extracted (or selected) particles of 1 µm or more excluding differentials.

The average particle diameter of the cathode active material may be measured, for example, utilizing a laser diffraction method. In one or more embodiments, the cathode active material may be dispersed in a solution, and then introduced into a commercially available laser diffraction particle size measurement device (e.g., a Microtrac MT 3000) and irradiated with ultrasonic waves of about 28 kHz at an output of 60 W, and then the average particle diameter (D50) on the basis of 50% of the particle diameter distribution in the measurement device may be calculated.

The term "D10" as used herein refers to an average diameter (or size) of particles whose cumulative volume corresponds to 10 vol% in the particle size distribution, and the term "D90" as used herein refers to an average diameter (or size) of particles whose cumulative volume corresponds to 90 vol% in the particle size distribution.

The particle size distribution (span) is denoted as (D90-D10)/D50. The particle size distribution is, for example, in a range of about 0.9 to about 1.5, about 0.95 to about 1.4, about 0.98 to about 1.2, or about 0.98 to about 1.1.

In one or more embodiments, D90 is in a range of about 4 µm to about 7 µm (e.g. about 4 µm to about 6 µm, or about 4 µm to about 5 µm). In one or more embodiments, D10 is in a range of 1.2 µm to 2.0 µm. For example, D90 is in a range of about 4 µm to about 7 µm (e.g. about 4 µm to about 6 µm, or about 4 µm to about 5 µm), and D10 is in a range of 1.2 µm to 2.0 µm. In one or more embodiments, D50 is in a range of about 2 µm to about 4 µm (e.g. about 2 µm to about 3.5 µm, or about 2.5 µm to about 3.5 µm). When the D90, D10, and D50 of the cathode active material are within the above ranges, the cathode active material has excellent or suitable dispersibility, and has excellent or suitable activity because the specific surface area thereof is appropriately or suitably maintained.

When the cathode active material includes the cobalt compound-containing coating layer, surface resistance characteristics are improved, and thus, a lithium secondary battery including a cathode including the same has enhanced lifespan characteristics.

In the present disclosure, the monolithic particle may be a particle containing at least one single crystal. The monolithic particle may be a particle containing a single crystal or several crystals.

The term "monolithic particle" as used herein refers to a one-body particle having a primary particle size (e.g. an average primary particle size, such as D50) of about 1 µm to about 4 µm, and the monolithic particle includes, for example, 1 to 3 particles. The monolithic particle includes, for example, 1 to 3 crystals.

In the cathode active material according to one or more embodiments, the size (*e.g.,* the average size, such as D50) of the monolithic particles is, for example, in a range of about 1 µm to about 4 µm, about 2 µm to about 4 µm, or about 2 µm to about 3.5 µm (e.g. about 2.5 µm to about 3.5 µm). When the size (*e.g.,* the average size, such as D50) of the monolithic particles of the cathode active material is within the above ranges, a cathode active material with excellent or suitable capacity properties may be obtained.

The term "inside" of the cathode active material as utilized herein refers to a region of 50 vol% to 70 vol%, for example, 60 vol% from the center of the cathode active material, based on the total volume from the center to the surface of the cathode active material, or refers to a remaining region excluding the region (outer side) within 3 µm from the outermost surface of the cathode active material in the total distance from the center to the surface of the cathode active material.

The content (*e.g*., amount) of molybdenum doped in the cathode active material according to one or more embodiments is in a range of at least about 0.1 mol% but less than 1 mol%, about 0.1 mol% to about 0.5 mol%, or about 0.1 mol% to about 0.4 mol% (e.g. about 0.2 mol% to about 0.4 mol%), with respect to the total content (*e.g*., amount) of metals other than lithium in the cathode active material. When the content (*e.g*., amount) of molybdenum is within the above ranges, a cathode active material having enhanced capacity and efficiency properties and lifespan properties may be obtained.

The cobalt compound-containing coating layer may be obtained by coating all or part of the surface of the cathode active material. For example, the coating layer may be obtained by coating 90 % or less, 80 % or less, 70 % or less, 50 % or less, 40 % or less, 30 % or less, 20 % or less, 10 % or less, or about 1 % to about 10 % of the surface of the cathode active material.

The amount of a cobalt compound in the coating layer is in a range of about 0.1 mol% to about 5.0 mol%, about 0.5 mol% to about 5.0 mol%, about 1 mol% to about 4 mol%, or about 1.5 mol% to about 3 mol%, with respect to the total amount (100 mol%) of the cathode active material. When the amount of the cobalt compound is within the above ranges, Ni³⁺ and Co⁴⁺, which are present in large amounts in a metal layer in a cathode active material synthesis process, are reduced into Ni²⁺ and Co³⁺/Co²⁺ or are concurrently (*e.g.*, simultaneously) reduced, thereby reducing the interfacial reactivity between the cathode active material and an electrolyte.

The cobalt compound-containing coating layer includes cobalt oxide, lithium cobalt oxide, or a combination thereof. In one or more embodiments, the cobalt compound-containing coating layer may further include at least one of (*e.g.,* at least one selected from among) boron, manganese, phosphorus, aluminium, zinc, zirconium, and/or titanium.

The coating layer has a thickness (e.g. an average thickness) of about 1 nm to about 50 nm, about 5 nm to about 45 nm, or about 10 nm to about 35 nm. When the thickness of the coating layer is within the above ranges, a cathode active material with enhanced surface resistance properties may be obtained. A thickness (e.g. average thickness) of the coating layer may be measured by scanning electron microscopy (SEM).

A nickel-based lithium metal oxide monolithic particle is a compound represented by Formula 1.

Formula 1 Liₐ(Ni_{1-x-y}M1ₓM2_{y})O_{2±α1}

wherein, in Formula 1, M1 is at least one element of (*e.g.,* at least one element selected from among) Co, Mn, and/or Al,

M2 is at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and
0.95≤a≤1.1, 0.6≤(1-x-y)<1, 0≤x<0.4, 0≤y<0.4, and 0≤α1≤0.1, wherein a case where both x and y are 0 at the same time is excluded.

The nickel-based lithium metal oxide monolithic particle is, for example, a compound represented by Formula 2.

Formula 2 Liₐ(Ni_{1-x-y-z}CoₓM3_{y}M4_{z})O_{2±α1}

wherein, in Formula 2, M3 is at least one element of (*e.g.,* at least one element selected from among) Mn and/or Al,

M4 is at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and
0.95≤a≤1.1, 0.6≤(1-x-y-z)<1, 0≤x<0.4, 0≤y<0.4, 0≤z<0.4, and 0≤α1≤0.1, wherein a case where all of x, y, and z are 0 at the same time is excluded.

In the cathode active material according to one or more embodiments, FWHM_{(003)/}FWHM₍₁₀₄₎ of the cathode active material, as measured by an X-ray diffraction analysis method utilizing Cu Kα radiation(1.54056 Å), is in a range of about 0.72 to about 0.79 or about 0.73 to about 0.77. When the full width at half maximum (FWHM) is within the above ranges, the crystal structure of the cathode active material may have enhanced stability.

The cathode active material of the disclosure has an FWHM₍₀₀₃₎ of about 0.089° to about 0.094°, about 0.0895° to about 0.093°, for example, about 0.0897° to about 0.0910°, and/or has an FWHM₍₁₀₄₎ of about 0.11° to about 0.13°, about 0.115° to about 0.125°, for example, about 0.1198° to about 0.1226°. As used herein, FWHM₍₀₀₃₎ refers to the full with at half maximum (FWHM) of a peak corresponding to the (003) plane, and FWHM₍₁₀₄₎ refers to the full with at half maximum of a peak corresponding to the (104) plane. FWHM_{(003)/}FWHM₍₁₀₄₎ is a parameter made to evaluate the degree of uniform orientation of crystal grains.

In one or more embodiments, it can be seen that the cathode active material according to one or more embodiments is in a monolithic particle state by confirming grains and grain boundaries of a sub-micro scale or higher when observing the cross-sectional microstructure through a scanning electron microscope.

FWHM_{(003)/}FWHM₍₁₀₄₎ of the cathode active material and an electrode plate including the cathode active material have the same numerical range. When FWHM_{(003)/}FWHM₍₁₀₄₎ are within the above ranges, the crystal structure of the cathode active material may have enhanced stability, and an expansion rate and a contraction rate according to the intercalation/deintercalation of lithium may be improved. Thus, the capacity characteristics and charge/discharge efficiency of a battery may be enhanced.

Hereinafter, a method of preparing a cathode active material, according to one or more embodiments, will be described in more detail.

First, a mixture obtained by mixing a nickel precursor, at least one metal precursor of (*e.g.,* at least one metal precursor selected from among) an M1 precursor and/or an M2 precursor, and a basic solution is subjected to a co-precipitation reaction, and then dried to obtain a nickel-based metal precursor having pores therein. The nickel-based metal precursor has amorphous properties.

The M1 precursor is the same as M1 of Formula 1, and is at least one of (*e.g.,* at least one selected from among) a cobalt precursor, a manganese precursor, and/or an aluminium precursor. In one or more embodiments, the M2 precursor is the same as M2 of Formula 1, and is a precursor containing at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr).

The metal precursor may be, for example, at least one of (*e.g.,* at least one selected from among) a cobalt precursor, a manganese precursor, and/or a metal (M2) precursor. For example, the metal precursor may be a cobalt precursor and/or manganese precursor.

During the co-precipitation reaction, the pH of the mixture is adjusted in two operations. The first operation is a pore formation operation, and the pH of the mixture is adjusted to about 11.5 to about 12. The second operation is a particle growth operation, and the pH of the mixture is adjusted to, for example, about 10.5 to about 11.9. The second operation is carried out at a lower pH than the first operation. As such, a difference in synthesis rate between the inside and the outside of the nickel-based metal precursor is caused by changing a co-precipitation rate. As a result, a nickel-based metal precursor having pores therein may be obtained. As used herein, the nickel-based metal precursor refers to a precursor for obtaining a nickel-based lithium metal oxide.

In the first operation, for example, the pH of the mixture is adjusted to about 11.6 to about 11.9 or about 11.7 to about 11.8. In the second operation, for example, the pH of the mixture is adjusted to be in a range of about 10.8 to about 11.7, about 11 to about 11.7, about 11.2 to about 11.6, or about 11.3 to about 11.6. A difference in pH between the first operation and the second operation is in a range of about 0.1 to about 1.5, about 0.1 to about 1.0, about 0.1 to about 0.8, about 0.1 to about 0.6, about 0.1 to about 0.5, about 0.1 to about 0.3, or about 0.1 to about 0.2. As such, by reducing the pH in the second operation by the above-described differences compared to the pH in the first operation, the co-precipitation rate is changed, thereby generating a difference in synthesis rate between the inside and the outside of the nickel-based metal precursor. As a result, a nickel-based metal precursor having pores therein may be obtained. As used herein, the nickel-based metal precursor refers to a precursor for obtaining a nickel-based lithium metal oxide.

The stirring time in the first operation may vary depending on the pH conditions of the first operation, but is, for example, in a range of about 8 hours to about 12 hours, or about 9 hours to about 10 hours.

In the disclosure, the above-described co-precipitation reaction proceeds at a faster rate than that in a general method of preparing a cathode active material precursor, so that the pore dispersion is controlled or selected to be high, and thus a cathode active material may be easily prepared without performing a separate pulverization process for the cathode active material, resulting in improved productivity. When the pore dispersion is controlled or selected to be high, a cathode active material has more pores after heat treatment, so that the cathode active material is easily broken during pressing, and thus, a cathode has excellent or suitable electrochemical characteristics. In one or more embodiments, it is possible to perform the co-precipitation reaction at a high speed by adjusting the stirring time to be short while the stirring rate is fast.

Like the cathode active material, the nickel-based metal precursor having pores therein includes secondary particles each containing a plurality of primary particles, and each secondary particle has a hollow structure having pores therein. The size (*e.g.,* average size, such as D50) of the secondary particles is in a range of about 10 µm to about 18 µm (e.g. about 10 µm to about 15 µm, or about 11 µm to about 14 µm), and the primary particles have a size (*e.g.,* average size, such as D50) of about 0.2 µm to about 0.3 µm.

The above-described nickel-based metal precursor (e.g., each secondary particle) having pores therein exhibits amorphous properties, and includes an inside having pores and an outside having a denser structure than the inside. The amorphous properties of the nickel-based metal precursor may be confirmed by X-ray diffraction analysis. The term "inside" of the nickel-based metal precursor as utilized herein refers a pore region in which a plurality of pores exist, and refers to a region of 50 vol% to 70 vol%, for example, 60 vol% from the center of the precursor (e.g., the secondary particle), based on the total volume from the center to the surface of the precursor, or refers to a remaining region excluding the region (outer side) within 3 µm from the outermost surface of the precursor in the total distance from the center to the surface of the precursor.

According to one or more embodiments, the inside of the nickel-based metal precursor is a pore region (*e.g*., with the plurality of pores), and the pore region represents a region having a major axis length (e.g. average major axis length) of about 2 µm to about 7 µm, for example, about 3.5 µm to about 5 µm.

In the nickel-based metal precursor having pores therein, the pore region (with the pores) has a size or average size (*e.g.,* the major axis length or average major axis length) of about 2 µm to about 7 µm or about 3.5 µm to about 5 µm, and the secondary particles have a size (e.g., each of the particles are made with an average size, such as D50) of about 10 µm to about 18 µm, about 10 µm to about 15 µm, or about 11 µm to about 14 µm. When the size (e.g. average size) of the pore region of the nickel-based metal precursor and the size (*e.g.,* average size, such as D50) of the secondary particles are within these ranges, a cathode active material having excellent or suitable phase stability and enhanced capacity properties may be obtained.

In the present disclosure, the size (*e.g.,* average size) of the pore region may be measured mainly utilizing a mercury intrusion method, a gas adsorption method, or an SEM. The gas adsorption method may be a Brunauer, Emmett, Teller (BET) method or a Barrett-Joyner-Halenda (BJH) method. The term "size" as utilized herein refers to an average size. In examples of the disclosure, the size may be measured utilizing a BET method. In one or more embodiments, the SEM method is utilized to evaluate the size through image analysis.

The mixture may include a complexing agent, a pH adjuster, and/or the like.

The pH adjuster serves to lower the solubility of metal ions in a reactor so that the metal ions are precipitated as hydroxides. The pH adjuster is, for example, ammonium hydroxide, sodium hydroxide (NaOH), sodium carbonate (Na₂CO₃), and/or the like. The pH adjuster is, for example, sodium hydroxide (NaOH).

The complexing agent serves to control the formation rate of precipitates in the co-precipitation reaction. The complexing agent is ammonium hydroxide (NH₄OH) (ammonia water), citric acid, acrylic acid, tartaric acid, glycolic acid, and/or the like. The content (*e.g.*, amount) of the complexing agent is an amount generally or suitably utilized in the art. The complexing agent is, for example, ammonia water.

A suitable nickel-based metal precursor may be obtained by washing and drying the product obtained according to the co-precipitation reaction. For example, the drying is carried out under general conditions.

The above-described nickel precursor and at least one metal precursor of (*e.g.,* at least one metal precursor selected from among) an M1 precursor and/or an M2 precursor include, for example, a nickel precursor, a manganese precursor, and/or a cobalt precursor. In one or more embodiments, the metal precursor includes, for example, a cobalt precursor, and/or an aluminium precursor.

Examples of the nickel precursor may include Ni(OH)₂, NiO, NiOOH, NiCO₃·2Ni(OH)₂·4H₂O, NiC₂O₄·2H₂O, Ni(NO₃)₂·6H₂O, NiSO₄, NiSO₄·6H₂O, fatty acid nickel salts, nickel halide, and/or a combination thereof. The manganese precursor may be, for example, manganese oxides such as Mn₂O₃, MnO₂, and Mn₃O₄, MnCO₃, Mn(NO₃)₂, MnSO₄, MnSO₄·H₂O, manganese acetate, manganese dicarboxylate, manganese citrate, fatty acid manganese salts, manganese oxyhydroxide, manganese halides such as manganese chloride, and/or a combination thereof.

Examples of the cobalt precursor may include Co(OH)₂, CoOOH, CoO, Co₂O₃, Co₃O₄, Co(OCOCH₃)₂·4H₂O, CoCl₂, Co(NO₃)₂·6H₂O, CoSO₄, Co(SO₄)₂·7H₂O, and/or a combination thereof.

The aluminium precursor may be, for example, aluminium hydroxide, aluminium chloride, aluminium oxide, and/or a combination thereof.

In the above-mentioned M2 precursor, the precursor containing at least one of the above-described elements may be a salt, hydroxide, oxyhydroxide, or halide containing at least one of the above-described elements, or a combination thereof. For example, the above-described salt containing at least one of the above-described elements may include at least one of (*e.g.,* at least one selected from among) sulfate, alkoxide, oxalate, phosphate, halide, oxyhalide, sulfide, oxide, peroxide, acetate, nitrate, carbonate, citrate, phthalate, and/or perchlorate containing at least one of the above-described elements.

The content (*e.g.*, amount) of the nickel precursor and the content (*e.g*., amount) of at least one metal precursor of (*e.g*., at least one metal precursor selected from among) an M1 precursor and/or an M2 precursor are stoichiometrically controlled or selected so that a suitable nickel-based metal precursor is obtained.

The nickel-based metal precursor is a compound represented by Formula 3, a compound represented by Formula 4, or a combination thereof.

Formula 3 (Ni_{1-x-y}M1ₓM2_{y})(OH)₂

In Formula 3, M1 is at least one element of *(e.g.,* at least one selected from among) Co, Mn, and/or Al, M2 is at least one element of (*e.g.,* at least one selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y)<1, 0≤x<0.4, and 0≤y<0.4, wherein a case where both x and y are 0 at the same time is excluded.

Formula 4 (Ni_{1-x-y}M1ₓM2_{y})O

In Formula 4, M1 is at least one element of (*e.g.,* at least one selected from among) Co, Mn, and/or Al, M2 is at least one element of (*e.g.,* at least one selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y)<1, 0≤x<0.4, and 0≤y<0.4, wherein a case where both x and y are 0 at the same time is excluded.

The nickel-based metal precursor is, for example, a compound of Formula 5, a compound of Formula 6, or a combination thereof.

Formula 5 Ni_{1-x-y-z}CoₓM3_{y}M4_{z}(OH)₂

In Formula 5, M3 is at least one element of (*e.g.,* at least one element selected from among) Mn and/or Al, M4 is at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y-z)<1, 0≤x<0.4, 0≤y<0.4, and 0≤z<0.4, wherein a case where all of x, y, and z are 0 at the same time is excluded.

Formula 6 (Ni_{1-x-y-z}CoₓM3_{y}M4_{z})O

In Formula 6, M3 is at least one element of (*e.g.,* at least one element selected from among) Mn and/or Al, M4 is at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y-z)<1, 0≤x<0.4, 0≤y<0.4, and 0≤z<0.4, wherein a case where all of x, y, and z are 0 at the same time is excluded.

The nickel-based metal precursor is, for example, a compound represented by Formula 7, a compound represented by Formula 8, or a combination thereof.

Formula 7 Ni_{1-x-y-}CoₓMn_{y}M4_{z}(OH)₂

In Formula 7, M4 is at least one element of (e.g., at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.6≤(1-x-y-z)<1, 0≤x<0.4, 0≤y<0.4, and 0≤z<0.4, wherein a case where all of x, y, and z are 0 at the same time is excluded,

Formula 8 Liₐ(Ni_{1-x-y-z}CoₓAl_{y}M4_{z})O

In Formula 8, M4 is at least one element of (*e.g.,* at least one element selected from among) boron (B), magnesium (Mg), calcium (Ca), strontium (Sr), barium (Ba), titanium (Ti), vanadium (V), chromium (Cr), iron (Fe), copper (Cu), and/or zirconium (Zr), and 0.95≤a≤1.1, 0.6≤(1-x-y-z)<1, 0≤x<0.4, 0≤y<0.4, and 0≤z<0.4, wherein a case where all of x, y, and z are 0 at the same time is excluded.

Subsequently, a mixture of the nickel-based metal precursor having pores therein and the lithium precursor is obtained.

The mixing ratio of the lithium precursor and the nickel-based metal precursor is stoichiometrically adjusted to prepare a suitable cathode active material. A molybdenum precursor is added to the mixture, and then the obtained mixture is subjected to primary heat treatment. Phase change and grain growth proceed through the primary heat treatment.

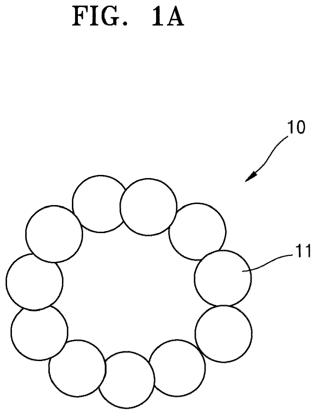

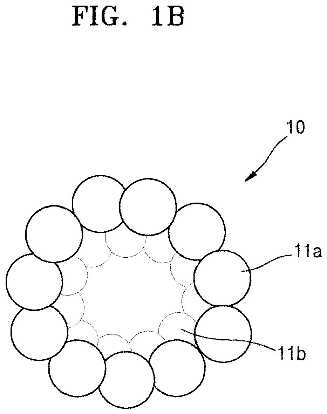

FIGS. 1A and 1B illustrate the cross-sectional structure of a product obtained after primary heat treatment in preparing a cathode active material according to one or more embodiments of the present disclosure.

The primary heat treatment product may include one or two primary particle layers.

As illustrated in FIG. 1A, a primary heat treatment product 10 includes a hollow primary particle layer having a single-layered structure. The hollow primary particle layer contains primary particles 11.

As illustrated in FIG. 1B, the primary heat treatment product may contain a hollow primary particle layer having a double-layered structure. Due to having such a structure, a breaking process may be easily performed during pulverization. In FIG. 1B, reference numerals 11a and 11b denote first primary particles and second primary particles, which respectively form a primary particle layer on a first layer and a primary particle layer on a second layer.

The primary heat treatment product is subjected to a pulverization process to obtain a product in a small monolithic particles state.

In one or more embodiments, the pulverization is performed utilizing a jet mill, a pin mill, an ACM miller, a disk mill, and/or the like. The pulverization is performed at, for example, about 8,000 rpm to about 20,000 rpm, or about 10,000 rpm to about 20,000 rpm, for example, about 12,000 rpm to about 16,000 rpm. The stirring time for pulverization varies depending on pulverization conditions and is, for example, in a range of about 30 seconds to about 90 seconds, about 40 seconds to about 80 seconds, or about 50 seconds to about 60 seconds.

A disintegration process may be further performed before the pulverization process of the primary heat treatment product. Through this disintegration process, a hard cake-like product obtained after the primary heat treatment may be disintegrated and made into powder. By further performing the disintegration process, monolithic particles having a substantially uniform particle state may be obtained.

The disintegration is performed at about 100 rpm to about 300 rpm, about 100 rpm to about 250 rpm, or about 120 rpm to about 275 rpm by utilizing roll crushers. The interval between the roll crushers is about 1 mm to about 3 mm, about 1.2 mm to about 2.8 mm, or about 1.5 mm. The stirring time for the disintegration varies depending on disintegration conditions and generally ranges from about 10 seconds to about 60 seconds.

The molybdenum precursor may be, for example, molybdenum hydroxide, molybdenum chloride, molybdenum oxide, ammonium molybdate, or a combination thereof.

The ammonium molybdate may be, for example, ammonium heptamolybdate hydrate ((NH₄)₆Mo₇O₂₄·4H₂O).

Subsequently, a cobalt precursor is added to the product in the form of small-grain monolithic particles to obtain a mixture. The cobalt precursor is utilized to form a cobalt compound-containing coating layer on a surface of a nickel-based lithium metal oxide.

In the present disclosure, the "pulverization" proceeds utilizing equipment such as a jet mill that applies a strong force (pneumatic pressure, mechanical pressure, and/or the like) to remove strong aggregation that occurs between primary particles of a secondary particle.

Secondary heat treatment is performed on the mixture obtained according to the above process to prepare a cathode active material in the form of small monolithic particles according to one or more embodiments.

The secondary heat treatment is performed at a lower temperature than the primary heat treatment, and crystallinity is recovered when the secondary heat treatment is performed. When the secondary heat treatment is performed at a higher temperature than the primary heat treatment, it is difficult to obtain monolithic particles having excellent or suitable phase stability. In addition, in the preparation method, when the primary heat treatment product is subjected to a pulverization process, it is difficult to obtain a cathode active material having a hollow structure.

The nickel-based metal precursor and the lithium precursor may be mixed such that a molar ratio of Li/Me (Me is a metal other than Li) is at least about 0.9 but less than 1.1, greater than about 1.0 and less than about 1.1, about 1.01 to about 1.05, or about 1.02 to about 1.04. The mixing process of the nickel-based metal precursor and the lithium precursor may be performed by two processes, not one process. In one or more embodiments, the mixing ratio of the nickel-based metal precursor and the lithium precursor is appropriately or suitably controlled or selected such that the molar ratio of Li/Me (Me is a metal other than Li) in the cathode active material finally obtained through a single process or two processes can be within the above ranges.

The lithium precursor may be, for example, lithium hydroxide, lithium carbonate, lithium sulfate, lithium nitrate, or a combination thereof.

The primary heat treatment may be performed at about 800 °C to about 1200 °C, about 830 °C to about 1150 °C, about 850 °C to about 1100 °C, about 850 °C to about 950 °C, or about 870 °C to about 920 °C under an oxidizing gas atmosphere, and/or the secondary heat treatment may be performed at about 600 °C to about 850 °C, about 600 °C to about 800 °C, about 650 °C to about 800 °C, about 700 °C to about 800 °C, or about 720 °C to about 790 °C under an oxidizing gas atmosphere. When the primary heat treatment and the secondary heat treatment are performed under the above conditions, a lithium secondary battery with high density and long lifespan may be manufactured.

The primary heat treatment time varies depending on the primary heat treatment temperature, and is performed for, for example, about 8 hours to about 20 hours.

The oxidizing gas atmosphere uses an oxidizing gas such as oxygen or air. For example, the oxidizing gas includes about 10 vol% to about 20 vol% of oxygen or air and about 80 vol% to about 90 vol% of an inert gas.

Examples of the cobalt precursor utilized to form a cobalt compound-containing coating layer may include hydroxide, sulfate, alkoxide, oxalate, phosphate, halide, oxyhalide, sulfide, oxide, peroxide, acetate, nitrate, carbonate, citrate, phthalate, perchlorate, or a combination thereof, each containing a cobalt compound. For example, the cobalt precursor may include at least one compound of (e.g., at least one compound selected from among) Co₃O₄, Co(OH)₂, CoO, CoOOH, Co(OCOCH₃)₂ · 4H₂O, Co(NO₃)₂ · 6H₂O, and/or Co(SO₄)₂ · 7H₂O.

The content (e.g., amount) of the cobalt precursor is stoichiometrically adjusted so that the amount of a cobalt compound contained in the cobalt compound-containing coating layer is in a range of about 0.1 mol% to about 5.0 mol% or about 0.5 mol% to about 5.0 mol% (e.g. about 1 mol% to about 4 mol%, or about 1.5 mol% to about 3 mol%) with respect to the total amount of the cathode active material.

The mixing of the nickel-based metal precursor and the lithium precursor may be dry mixing, and may be performed utilizing a mixer and/or the like. The dry mixing may be performed by milling. Milling conditions are not particularly limited, but the mixing may be carried out such that there is little deformation such as micronization of the precursor utilized as a starting material. The size of the lithium precursor mixed with the nickel-based metal precursor may be previously controlled or selected. The size (average particle diameter, such as D50) of the lithium precursor is in a range of about 5 µm to about 15 µm, for example, about 10 µm. A required mixture may be obtained by milling the lithium precursor having a size in the above ranges at about 300 rpm to about 3,000 rpm. When the temperature inside the mixer rises to 30 °C or higher during the milling process, a cooling process may be performed to maintain the temperature inside the mixer within a range of room temperature (25 °C).

The nickel-based metal precursor is, for example, Ni_{0.92}Co_{0.06}Mn_{0.02}(OH)₂, Ni_{0.92}CO_{0.05}Al_{0.03}(OH)₂, Ni_{0.94}CO_{0.03}Al_{0.03}(OH)₂, Ni_{0.88}CO_{0.06}Al_{0.06}(OH)₂, Ni_{0.96}CO_{0.02}Al_{0.02}(OH)₂, Ni_{0.93}CO_{0.04}Al_{0.03}(OH)₂, Ni_{0.8}CO_{0.15}Al_{0.05}O₂(OH)₂, Ni_{0.75}Co_{0.20}Al_{0.05}(OH)₂, Ni_{0.92}CO_{0.05}Mn_{0.03}(OH)₂, Ni_{0.94}CO_{0.03}Mn_{0.03}(OH)₂, Ni_{0.88}CO_{0.06}Mn_{0.06}(OH)₂, Ni_{0.96}CO_{0.02}Mn_{0.02}(OH)₂, Ni_{0.93}Co_{0.04}Mn_{0.03}(OH)₂, Ni_{0.8}Co_{0.15}Mn_{0.05}(OH)₂, Ni_{0.75}Co_{0.20}Mn_{0.05}(OH)₂, Ni_{0.6}Co_{0.2}Mn_{0.2}(OH)₂, Ni_{0.7}Co_{0.15}Mn_{0.15}(OH)₂, Ni_{0.7}Co_{0.1}Mn_{0.2}(OH)₂, Ni_{0.8}Co_{0.1}Mn_{0.1}(OH)₂, or Ni_{0.85}CO_{0.1}Al_{0.05}(OH)₂.

In one or more embodiments, the nickel-based lithium metal oxide is, for example, LiNi_{0.92}Co_{0.06}Mn_{0.02}O₂, Li_{1.05}Ni_{0.92}Co_{0.05}Al_{0.03}O₂, Li_{1.05}Ni_{0.94}Co_{0.03}Al_{0.03}O₂, Li_{1.05}Ni_{0.88}Co_{0.06}Al_{0.06}O₂, Li_{1.05}Ni_{0.96}Co_{0.02}Al_{0.02}O₂, Li_{1.05}Ni_{0.93}Co_{0.04}Al_{0.03}O₂, Li_{1.05}Ni_{0.8}Co_{0.15}Al_{0.05}O₂, Li_{1.05}Ni_{0.75}Co_{0.20}Al_{0.05}O₂, Li_{1.05}Ni_{0.92}Co_{0.05}Mn_{0.03}O₂, Li_{1.05}Ni_{0.94}Co_{0.03}Mn_{0.03}O₂, Li_{1.05}Ni_{0.88}Co_{0.06}Mn_{0.06}O₂, Li_{1.05}Ni_{0.96}Co_{0.02}Mn_{0.02}O₂, Li_{1.05}Ni_{0.93}Co_{0.04}Mn_{0.03}O₂, Li_{1.05}Ni_{0.8}Co_{0.15}Mn_{0.05}O₂, Li_{1.05}Ni_{0.75}Co_{0.20}Mn_{0.05}O₂, Li_{1.05}Ni_{0.6}Co_{0.2}Mn_{0.2}O₂, Li_{1.05}Ni_{0.7}Co_{0.15}Mn_{0.15}O₂, Li_{1.05}Ni_{0.7}Co_{0.1}Mn_{0.2}O₂, Li_{1.05}Ni_{0.8}Co_{0.1}Mn_{0.1}O₂, Li_{1.05}Ni_{0.85}Co_{0.1}Al_{0.05}O₂, Li_{1.04}Ni_{0.92}Co_{0.06}Mn_{0.02}O₂, Li_{1.04}Ni_{0.92}Co_{0.05}Al_{0.03}O₂, Li_{1.04}Ni_{0.94}Co_{0.03}Al_{0.03}O₂, Li_{1.04}Ni_{0.88}Co_{0.06}Al_{0.06}O₂, Li_{1.04}Ni_{0.96}Co_{0.02}Al_{0.02}O₂, Li_{1.04}Ni_{0.93}Co_{0.04}Al_{0.03}O₂, Li_{1.04}Ni_{0.8}Co_{0.15}Al_{0.05}O₂, Li_{1.04}Ni_{0.75}Co_{0.20}Al_{0.05}O₂, Li_{1.04}Ni_{0.92}Co_{0.05}Mn_{0.03}O₂, Li_{1.04}Ni_{0.94}Co_{0.03}Mn_{0.03}O₂, Li_{1.04}Ni_{0.88}Co_{0.06}Mn_{0.06}O₂, Li_{1.04}Ni_{0.96}Co_{0.02}Mn_{0.02}O₂, Li_{1.04}Ni_{0.93}Co_{0.04}Mn_{0.03}O₂, Li_{1.04}Ni_{0.8}Co_{0.15}Mn_{0.05}O₂, Li_{1.04}Ni_{0.96}Co_{0.02}Mn_{0.05}O₂, Li_{1.04}Ni_{0.6}Co_{0.2}Mn_{0.2}O₂, Li_{1.04}Ni_{0.7}Co_{0.15}Mn_{0.15}O₂, Li_{1.04}Ni_{0.7}Co_{0.1}Mn_{0.2}O₂, Li_{1.04}Ni_{0.8}Co_{0.1}Mn_{0.1}O₂ or Li_{1.04}Ni_{0.85}Co_{0.1}Al_{0.05}O₂.

According to one or more embodiments, a cathode for a lithium secondary battery includes a cathode current collector and a cathode active material layer comprising the above-described cathode active material.

According to one or more embodiments, a lithium secondary battery includes the above-described cathode, an anode, and an electrolyte between the cathode and the anode.

By utilizing the method of preparing a cathode active material according to one or more embodiments, a lithium secondary battery having enhanced discharge capacity and charge/discharge efficiency may be manufactured.

Hereinafter, a method of manufacturing a lithium secondary battery including a cathode including a cathode active material according to one or more embodiments, an anode, a lithium salt-containing non-aqueous electrolyte, and a separator will be described in more detail below.

The cathode and the anode are fabricated by forming a cathode active material layer and an anode active material layer by applying a composition for forming the cathode active material layer and a composition for forming the anode active material layer onto current collectors, respectively and drying the resulting current collectors.

The composition for forming the cathode active material layer is prepared by mixing a cathode active material, a conductive material, a cathode binder, and a solvent. As the cathode active material, a nickel-based active material according to one or more embodiments is utilized.

The cathode binder serves to improve the adhesion between cathode active material particles and the adhesion between the cathode active material and the cathode current collector. Specific examples of the cathode binder may include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene monomer (EPDM), sulfonated EPDM, styrene-butadiene rubber (SBR), fluorine rubber, or one or more suitable copolymers thereof. These cathode binders may be utilized alone, and a mixture of two or more thereof may be utilized.

The conductive material is not particularly limited as long as it has conductivity (*e.g*., is a conductor) without causing chemical change in the battery, and examples thereof may include: graphite such as natural graphite and/or artificial graphite; carbon-based materials such as carbon black, acetylene black, ketjen black, channel black, furnace black, lamp black, and thermal black; conductive fibers such as carbon fibers and/or metal fibers; carbon fluoride; metal powders such as aluminium powder and/or nickel powder; conductive whiskers (*e.g.,* single crystals in the form of filaments) such as zinc oxide and/or potassium titanate; conductive metal oxides such as titanium oxide; and/or conductive materials such as polyphenylene derivatives.

The amount of the conductive material is in a range of about 1 part by weight to about 10 parts by weight or about 1 part by weight to about 5 parts by weight with respect to 100 parts by weight of the cathode active material. When the amount of the conductive material is within the above ranges, the finally obtained electrode has excellent or suitable conductivity.

Non-limiting examples of the solvent may include N-methylpyrrolidone, and the amount of the solvent is in a range of about 20 parts by weight to about 200 parts by weight with respect to 100 parts by weight of the cathode active material. When the amount of the solvent is within the above ranges, the operation for forming a cathode active material layer is facilitated.

The cathode current collector has a thickness of about 3 µm to about 500 µm, and is not particularly limited as long as it has high conductivity without causing chemical changes in the battery. For example, the cathode current collector may be formed of stainless steel, aluminium, nickel, titanium, heat-treated carbon, or aluminium or stainless steel that is surface-treated with carbon, nickel, titanium, silver, and/or the like. The current collector may have increased adhesion to the cathode active material by forming fine irregularities on the surface thereof, and one or more suitable forms, such as films, sheets, foils, nets, porous bodies, foams, and/or nonwoven fabrics are possible.

The cathode current collector may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. By including the thermoplastic polymer in the base film, when a short circuit occurs, the base film is liquefied and a rapid increase in current may be suppressed or reduced. The base film may be, for example, an insulator. The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof. A cathode current collector may further include a metal chip and/or a lead tab. More detailed descriptions of the base film, the metal layer, the metal chip, and the lead tab of the cathode current collector are referred to the description of the anode current collector. Due to having the structure of the cathode current collector, the weight of the electrode may be reduced, resulting in improved energy density.

Separately, a composition for forming the anode active material layer is prepared by mixing an anode active material, an anode binder, and a solvent.

As the anode active material, a material capable of reversibly intercalating/deintercalating lithium ions, a lithium metal, an alloy of a lithium metal, a material capable of doping and undoping lithium, transition metal oxide, or a combination thereof may be utilized. Lithium titanium oxide may be utilized as the transition metal oxide.

Examples of the material capable of reversibly intercalating/deintercalating lithium ions may include carbon materials, that is, carbon-based anode active materials generally utilized/generally available in lithium secondary batteries. Examples of the carbon-based anode active material may include crystalline carbon, amorphous carbon, and/or a combination thereof. Examples of the crystalline carbon may include graphite such as shapeless, plate-like, flake-like, spherical or fibrous natural graphite or artificial graphite, and examples of the amorphous carbon include soft carbon or hard carbon, mesophase pitch carbide, and calcined coke.

As the alloy of the lithium metal, an alloy of lithium and a metal of (e.g., a metal selected from among) Na, K, Rb, Cs, Fr, Be, Mg, Ca, Sr, Si, Sb, Pb, In, Zn, Ba, Ra, Ge, Al and/or Sn may be utilized (e.g. Na, K, Rb, Cs, Be, Mg, Ca, Sr, Si, Sb, Pb, In, Zn, Ba, Ge, Al and/or Sn).

Examples of the material capable of doping and undoping lithium may include silicon-based materials such as Si, SiOₓ (0<x<2), and Si-Q alloys (Q is an element of (*e.g.,* selected from among) alkali metals, alkaline earth metals, Group 13 elements, Group 14 elements, Group 15 elements, Group 16 elements, rare earth elements, and/or a combination thereof, not Si), Si-C composites, Sn, SnO₂, Sn-R (R is an element of (*e.g.,* selected from among) alkali metals, alkaline earth metals, Group 13 elements, Group 14 elements, Group 15 elements, Group 16 elements, rare earth elements, and/or a combination thereof, not Sn), and Sn-C composites. In one or more embodiments, a mixture of SiO₂ and at least one of the above materials may be utilized. The elements Q and R may (each) be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ge, P, As, Sb, Bi, S, Se, Te, or a combination thereof).

Lithium titanium oxide may be utilized as the transition metal oxide.

Non-limiting examples of the anode binder may include one or more suitable types (kinds) of binder polymers such as a polyvinylidene fluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene-butadiene rubber (SBR), fluorine rubber, polyacrylic acid and polymers in which hydrogen of polyacrylic acid is substituted with Li, Na, or Ca, or one or more suitable copolymers.

The anode active material layer may further include a thickener.

As the thickener, at least one of carboxymethyl cellulose (CMC), carboxyethyl cellulose, starch, regenerated cellulose, ethyl cellulose, hydroxymethyl cellulose, hydroxyethyl cellulose, hydroxypropyl cellulose, and/or polyvinyl alcohol may be utilized, and for example, CMC may be utilized.

The amount of the solvent is in a range of about 100 parts by weight to about 300 parts by weight with respect to 100 parts by weight of the total weight of the anode active material layer. When the amount of the solvent is within the above range, the operation for forming the anode active material layer is facilitated.

The anode active material layer does not require a conductive material when conductivity is secured. The anode active material layer may further include a conductive material as desired or needed. The conductive material is not particularly limited as long as it has conductivity (*e.g*., is a conductor) without causing chemical changes in the battery, and examples thereof may include: graphite such as natural graphite or artificial graphite; carbon-based materials such as carbon black, acetylene black, ketjen black, channel black, furnace black, lamp black, and/or thermal black; conductive fibers such as carbon fibers and/or metal fibers; conductive tubes such as carbon nanotubes; carbon fluoride; metal powders such as aluminium powder, and/or nickel powder; conductive whiskers such as zinc oxide and/or potassium titanate; conductive metal oxides such as titanium oxide; and/or other conductive materials such as polyphenylene derivatives. The conductive material may be carbon black, and in one or more embodiments, may be carbon black having an average particle diameter of several tens of nanometers.

When the anode active material layer includes the conductive material, the amount of the conductive material is in a range of about 0.01 parts by weight to about 10 parts by weight, about 0.01 parts by weight to about 5 parts by weight, or about 0.1 parts by weight to about 2 parts by weight with respect to 100 parts by weight of the total weight of the anode active material layer.

The anode current collector is generally made to have a thickness of about 3 µm to about 500 µm. The anode current collector is not particularly limited as long as it has conductivity (e.g., is a conductor) without causing chemical changes in the battery. For example, the anode current collector may be formed of copper, stainless steel, aluminium, nickel, titanium, heat-treated carbon, copper or stainless steel that is surface-treated with carbon, nickel, titanium, silver, and/or the like, or an Al-Cd alloy. In one or more embodiments, as the cathode current collector, the anode current collector may have fine unevenness on its surface so as to increase the adhesive strength of the current collector to the anode active material, and may be utilized in any suitable form including films, sheets, foils, nets, porous structures, foams, and/or nonwoven fabrics.

The anode current collector may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), and/or a combination thereof. By including the thermoplastic polymer in the base film, when a short circuit occurs, the base film is liquefied and a rapid increase in current may be suppressed or reduced. The base film may be, for example, an insulator. The metal layer may include, for example, copper (Cu), stainless steel, titanium (Ti), iron (Fe), cobalt (Co), nickel (Ni), or an alloy thereof. The metal layer may act as an electrochemical fuse and break in the case of overcurrent to perform a short circuit prevention function. The limit current and the maximum current may be adjusted by adjusting the thickness of the metal layer. The metal layer may be plated or deposited on the base film. When the thickness of the metal layer is reduced, the limit current and/or the maximum current of anode current collector is reduced, and thus stability of a lithium battery during a short circuit may be enhanced. A lead tab may be added on the metal layer for connection to the outside. The lead tab may be welded to the metal layer or the metal layer/base film laminate by ultrasonic welding, laser welding, spot welding, and/or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil or metal mesh. The metal chip may be, for example, aluminium foil, copper foil, or SUS foil. The lead tab may be welded to a metal chip/metal layer laminate or a metal chip/metal layer/base film laminate by welding to the lead tab after the metal chip is disposed on the metal layer. During welding, the metal layer or the metal layer/metal chip laminate may be electrically connected to the lead tab while the base film, the metal layer, and/or the metal chip are melted during welding. A metal chip and/or a lead tab may be added on a portion of the metal layer. The base film may have a thickness of, for example, about 1 µm to about 50 µm, about 1.5 µm to about 50 µm, about 1.5 µm to about 40 µm, or about 1 µm to about 30 µm. When the thickness of the base film is within the above ranges, the weight of an electrode assembly may be more effectively reduced. The base film may have a melting point of, for example, about 100 °C to about 300 °C, about 100 °C to about 250 °C, or about 100 °C to about 200 °C. Because the melting point of the base film is within the above ranges, the base film may be melted and easily coupled to the lead tab in the lead tab welding process.

Surface treatment such as corona treatment may be performed on the base film to improve the adhesion between the base film and the metal layer. The metal layer may have a thickness of, for example, about 0.01 µm to about 3 µm, about 0.1 µm to about 3 µm, about 0.1 µm to about 2 µm, or about 0.1 µm to about 1 µm. When the thickness of the metal layer is within the above ranges, the stability of an electrode assembly may be secured while maintaining conductivity. The metal chip may have a thickness of, for example, about 2 µm to about 10 µm, about 2 µm to about 7 µm, or about 4 µm to about 6 µm. When the thickness of the metal chip is within the above ranges, connection between the metal layer and the lead tab may be facilitated. Because the anode current collector has such a structure, the weight of the electrode may be reduced, resulting in improved energy density.

A separator is interposed between the cathode and the anode, manufactured according to the above processes.

The separator has a pore diameter (e.g. an average pore diameter) of about 0.01 µm to about 10 µm and generally has a thickness of about 5 µm to about 30 µm. For example, an olefin-based polymer such as polypropylene or polyethylene, or a sheet or nonwoven fabric made of glass fiber is utilized. When a solid electrolyte such as a polymer is utilized as the electrolyte, the solid electrolyte may also serve as the separator.

The lithium salt-containing non-aqueous electrolyte includes a non-aqueous electrolyte solution and a lithium salt. As the non-aqueous electrolyte, a non-aqueous electrolyte solution, an organic solid electrolyte, an inorganic solid electrolyte, and/or the like is utilized.

Non-limiting examples of the non-aqueous electrolyte solution may include aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethyl sulfoxide, 1,3-dioxolane, N,N-formamide, N,N-dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and/or ethyl propionate.

Non-limiting examples of the organic solid electrolyte may include polyethylene derivatives, polyethylene oxide derivatives, polypropylene oxide derivatives, phosphoric acid ester polymers, polyester sulfide, polyvinyl alcohol, and/or polyvinylidene fluoride.

Non-limiting examples of the inorganic solid electrolyte may include nitrides, halogenides, silicates, sulfides and sulfates of Li such as Li₃N, Lil, Li₅NI₂, Li₃N-LiI-LiOH, LiSiO₄, Li₂SiS₃, Li₄SiO₄, Li₄SiO₄-LiI-LiOH, and/or Li₃PO₄-Li₂S-SiS₂.

The lithium salt is a material easily soluble in the non-aqueous electrolyte, and non-limiting examples thereof may include LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, (FSO₂)₂NLi, lithium chloroborate, and/or a combination thereof.

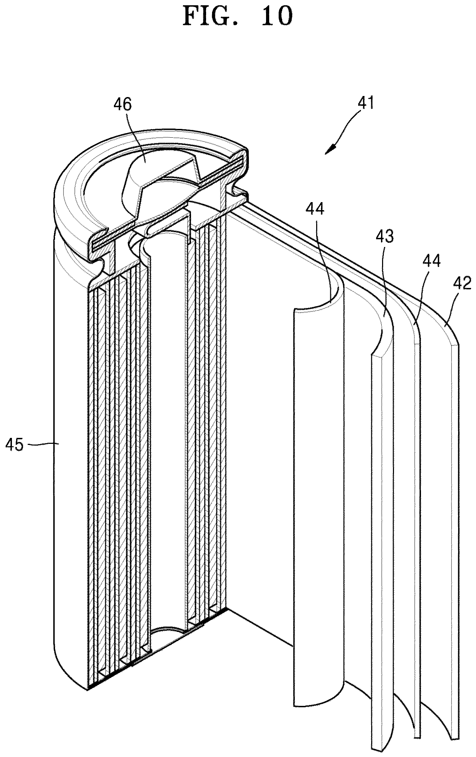

FIG. 10 is a schematic exploded perspective view illustrating the representative structure of a lithium secondary battery 41 according to one or more embodiments of the present disclosure.

Referring to FIG. 10, the lithium secondary battery 41 includes a cathode 43 according to one or more embodiments, an anode 42, and a separator 44. An electrode assembly in which the cathode 43 as described above, the anode 42, and the separator 44 are wound or folded is accommodated in a battery case 45. According to a battery shape, the separator may be disposed between the cathode and the anode to form alternately stacked battery structures. Subsequently, an electrolyte (e.g., an organic electrolyte solution) is injected into the battery case 45 and the battery case 45 is sealed with a cap assembly 46 to complete the manufacture of the lithium secondary battery 41. The battery case 45 may have a cylindrical, rectangular or thin-film shape. For example, the lithium secondary battery 41 may be a large-scale thin-film-type or kind battery. The lithium secondary battery may be a lithium-ion battery. The battery structure may be accommodated in a pouch, and then impregnated in an organic electrolyte solution and sealed, thereby completing the manufacture of a lithium-ion polymer battery. In one or more embodiments, a plurality of battery structures is stacked to form a battery pack, and such a battery pack may be utilized in all devices requiring high capacity and high output. For example, the battery pack may be utilized in notebooks, smart phones, electric vehicles (EVs), and/or the like.

In one or more embodiments, because the lithium secondary battery has excellent or suitable storage stability, lifespan characteristics, and high-rate characteristics at high temperatures, the lithium secondary battery may be utilized in electric vehicles (EVs). For example, the lithium secondary battery may be utilized in hybrid vehicles such as plug-in hybrid electric vehicles (PHEVs).

The disclosure will be described in further detail with reference to the following examples and comparative examples. However, these examples are provided for illustrative purposes only and are not intended to limit the scope of the present disclosure.

### Preparation of nickel-based metal precursor

### Preparation Example 1

A nickel-based metal precursor (Ni_{0.92}Co_{0.06}Mn_{0.02}(OH)₂) was synthesized through coprecipitation.

Nickel sulfate (NiSO₄·6H₂O), cobalt sulfate (CoSO₄·7H₂O), and manganese sulfate (MnSO₄·H₂O) were dissolved in distilled water as a solvent in a molar ratio of Ni:Co:Mn=92:6:2 to prepare a metal raw material mixture solution. To form a complex compound, diluted ammonia water (NH₄OH) and sodium hydroxide (NaOH) as a precipitant were prepared. Thereafter, the metal raw material mixture solution, ammonia water, and sodium hydroxide were put into a reactor. Sodium hydroxide was added to maintain the pH inside the reactor.

After the pH of the mixture was adjusted to a pH of 11.7 and the mixture was stirred for 10 hours, the pH of the mixture was adjusted to 11.5, thereby reducing the pH by about 0.2 relative to the initial pH, so that a co-precipitation rate was changed to cause a difference in synthesis rate between the inside and the outside of the nickel-based metal precursor, thereby obtaining a nickel-based metal precursor having pores therein.

After the reaction was carried out for about 20 hours while stirring the reaction mixture, the addition of the metal raw material mixture solution was stopped.

The slurry solution in the reactor was filtered, washed with high-purity distill water, and then dried in a hot air oven at 200 °C for 24 hours to obtain a hollow nickel-based metal precursor (Ni_{0.92}Co_{0.06}Mn_{0.02}(OH)₂) having pores therein. The nickel-based metal precursor includes (e.g., is in the form of) secondary particles each being an aggregate of primary particles, and the average particle diameter of the secondary particles is about 14 µm.

### Preparation of cathode active material for lithium secondary battery

### Example 1: Co coating (2 mol%) and Mo doping (0.1 mol%)

The hollow nickel-based metal precursor (Ni_{0.92}Co_{0.06}Mn_{0.02}(OH)₂)) of Preparation Example 1 and lithium carbonate were added to obtain a first mixture. The mixing molar ratio (Li/Me) of lithium to a metal in the first mixture is about 1.04. As used herein for the Examples, the metal content (e.g., amount) is a total content (e.g., amount) of Ni, Co, and Mn (i.e. a metal other than Li). Ammonium heptamolybdate hydrate ((NH₄)₆Mo₇O₂₄·4H₂O) was added to the first mixture, and the mixture was subjected to primary heat treatment at 900 °C for 15 hours in an air atmosphere. The amount of the ammonium heptamolybdate hydrate was controlled or selected so that a doping amount of molybdenum in the cathode active material was 0.1 mol% with respect to the total content (*e.g*., amount) of metals other than lithium.

The primary heat treatment product was pulverized utilizing a Hosogawa jet mill (Blower 35Hz, AFG 8000 rpm, Air 4 kgf/cm²) to produce a product in the form of small monolithic particles having a particle size of 3-4 µm after pulverization.

The product that had been pulverized according to the above process was subjected to secondary heat treatment at about 770 °C for 12 hours in an oxygen atmosphere, and Co(OH)₂ as a cobalt precursor was added thereto, and secondary heat treatment was performed at about 770 °C in an oxygen atmosphere, thereby preparing a cathode active material (LiNi_{0.899}Co_{0.08}Mn_{0.02}Mo_{0.001}O₂) having a hollow structure and including a cobalt compound-containing coating layer and in the form of monolithic particles. In addition, the amount of the cobalt precursor was controlled or selected so that the amount of the cobalt compound in the cobalt compound-containing coating layer was 2 mol% with respect to the total amount of the cathode active material.

The cathode active material obtained according to Example 1 was in the form of LiNi_{0.899}Co_{0.08}Mn_{0.02}Mo_{0.001}O₂ monolithic particles. In addition, the amount of the cobalt compound is 2 mol% with respect to the total amount of the finally obtained cathode active material, and the thickness of the coating layer is about 20 nm.

### Example 2: Co coating (2 mol%) and Mo doping (0.2 mol%)

LiNi_{0.898}Co_{0.08}Mn_{0.02}Mo_{0.002}O₂ was prepared as a cathode active material for a lithium secondary battery in substantially the same manner as in Example 1, except that the amount of the molybdenum was controlled or selected to be about 0.2 mol% with respect to the total content (*e.g*., amount) of metals other than lithium in the cathode active material.

### Example 3: Co coating (2 mol%) and Mo doping (0.4 mol%)

LiNi_{0.896}Co_{0.08}Mn_{0.02}Mo_{0.004} was prepared as a cathode active material for a lithium secondary battery in substantially the same manner as in Example 1, except that the amount of the molybdenum was controlled or selected to be about 0.4 mol% with respect to the total content (e.g., amount) of metals other than lithium in the cathode active material.

### Reference Example 1: Co coating (2 mol%) and Mo undoped

A cathode active material for a lithium secondary battery was prepared in substantially the same manner as in Example 1, except that the process of adding ammonium heptamolybdate hydrate to the first mixture was not performed.

### Reference Example 2: Co coating (2 mol%) and Mo doping (1.0 mol%)

A cathode active material for a lithium secondary battery was prepared in substantially the same manner as in Example 1, except that the content (e.g., amount) of ammonium heptamolybdate hydrate added to the first mixture was controlled or selected such that a doping amount of molybdenum in the cathode active material was 1.0 mol% with respect to the total content (e.g., amount) of metals other than lithium in the cathode active material.

### Manufacture of coin cell

### Manufacture Example 1

A coin cell was manufactured as follows without a separate pulverizing process utilizing the cathode active material obtained according to Example 1 as a cathode active material.

A mixture of 96 g of the nickel-based active material (LiNi_{0.899}Co_{0.08}Mn_{0.02}Mo_{0.001}O₂) obtained according to Example 1, 2 g of polyvinylidene fluoride (PVdF, Solef 6020 (Solvay company)), 47 g of N-methylpyrrolidone as a solvent, and 2 g of carbon black as a conductive agent was uniformly dispersed utilizing a mixture while removing air bubbles, thereby preparing a slurry for forming a cathode active material layer.

The slurry prepared according to the above process was coated on an aluminium foil utilizing a doctor blade to form a thin electrode plate, dried at 135 °C for 3 hours or longer, and then pressed and vacuum-dried to fabricate a cathode.

A 2032 type or kind coin cell was manufactured utilizing the cathode and a lithium metal counter electrode as a counter electrode. A separator (thickness: about 16 µm) made of a porous polyethylene (PE) film was interposed between the cathode and the lithium metal counter electrode, and an electrolyte solution was injected, thereby completing the manufacture of a 2032-type or kind coin cell. As the electrolyte solution, a solution containing 1.15M LiPF₆ dissolved in a solvent in which ethylene carbonate (EC), ethyl methyl carbonate (EMC), and DMC were mixed in a volume ratio of 20:40:40 was utilized. Vinylene carbonate was added to the electrolyte solution. The amount of vinylene carbonate was 1.5 wt% with respect to 100 wt% of the electrolyte solution.

### Manufacture Examples 2 and 3: Manufacture of coin cells

Coin cells were manufactured in substantially the same manner as in Manufacture Example 1, except that the cathode active materials of Examples 2 and 3 were utilized instead of the cathode active material of Example 1, respectively.

### Reference Manufacture Examples 1 and 2: Manufacture of coin cells

Coin cells were manufactured in substantially the same manner as in Manufacture Example 1, except that the cathode active materials obtained according to Reference Examples 1 and 2 were respectively utilized as the cathode active materials.

### Evaluation Example 1: Scanning electron microscopy I

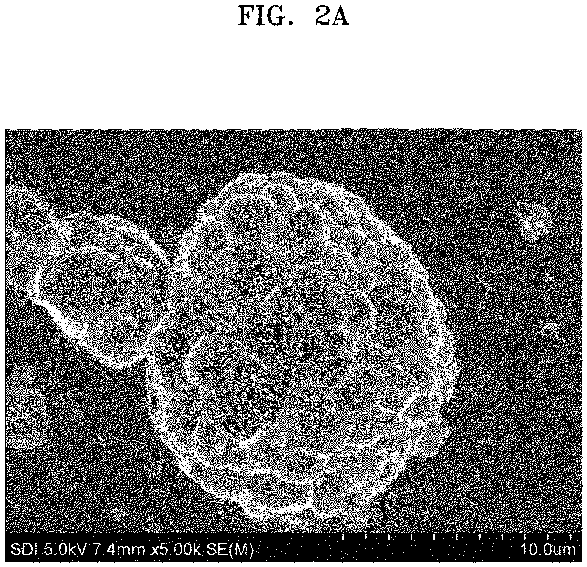

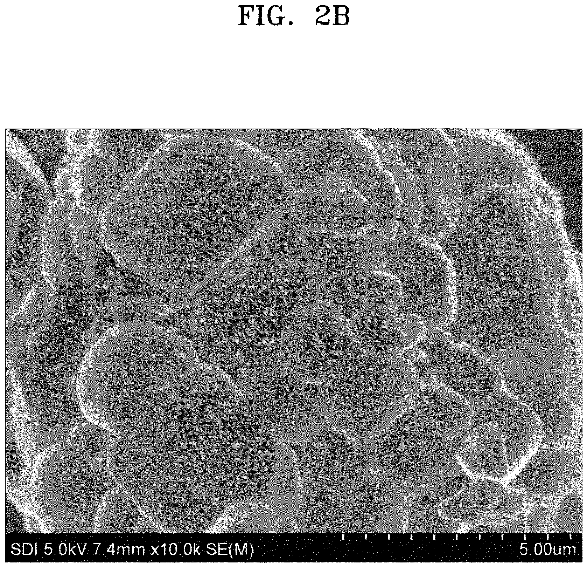

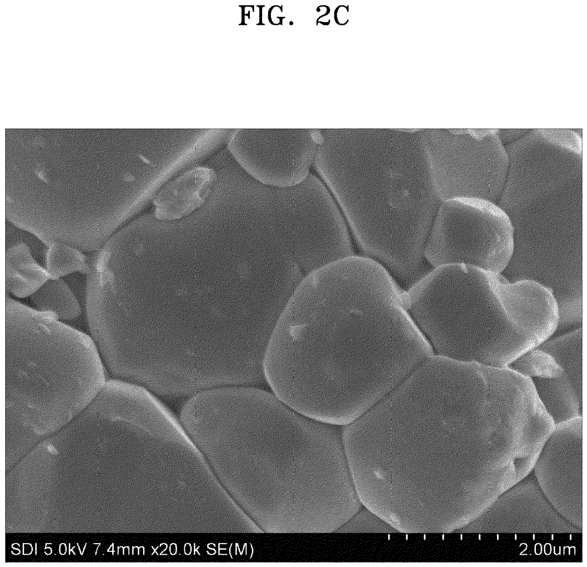

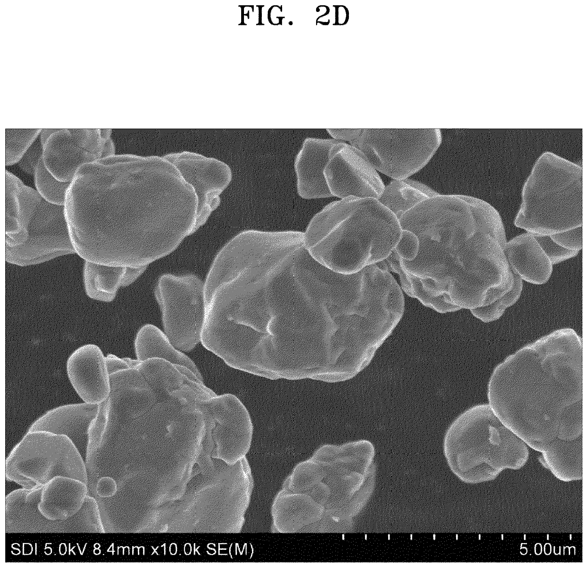

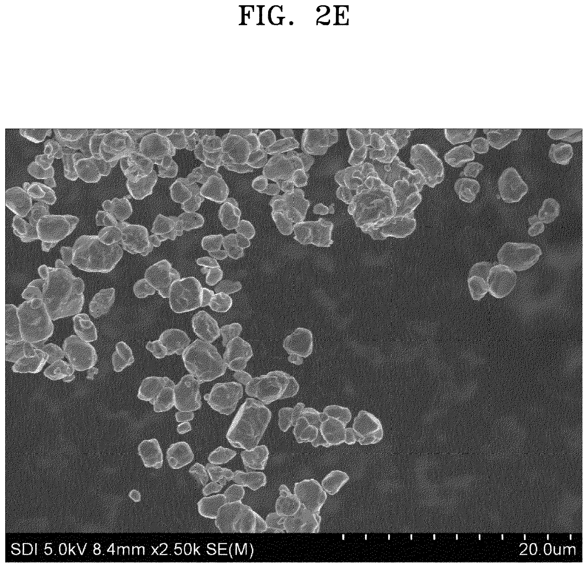

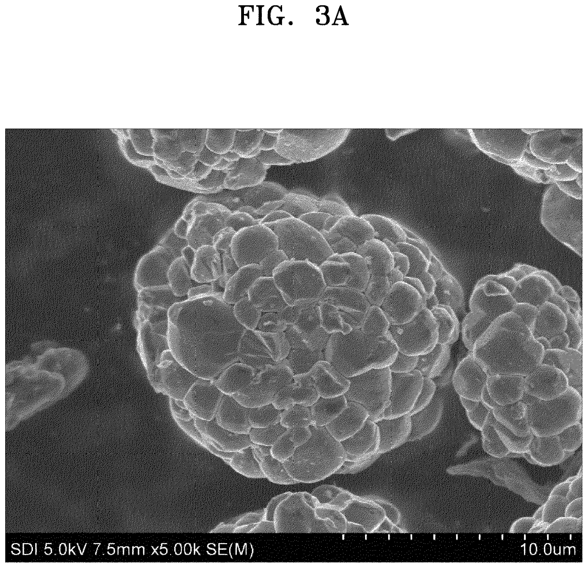

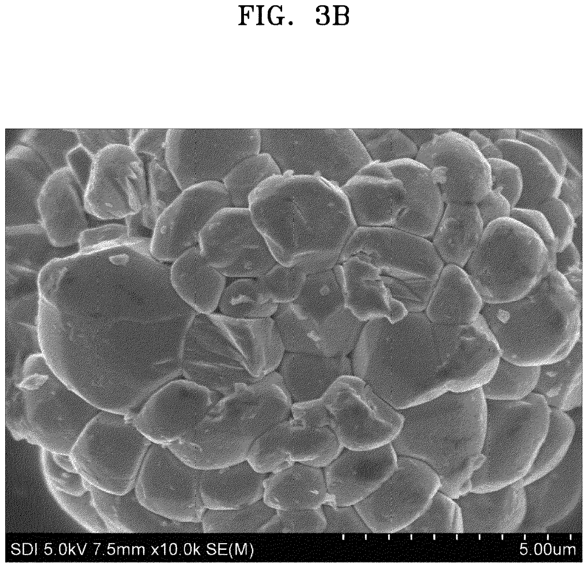

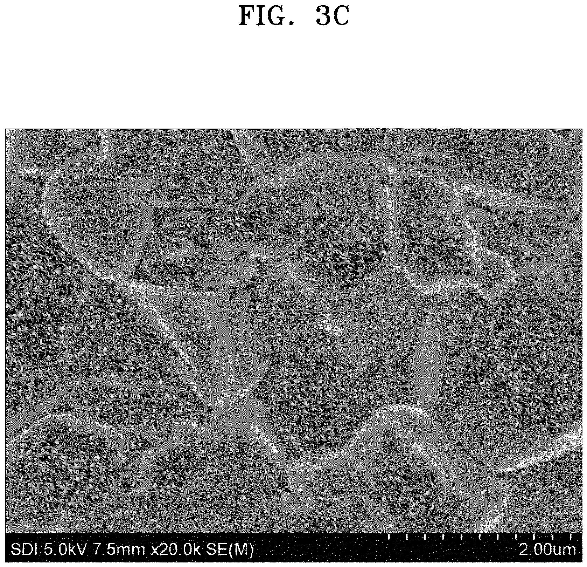

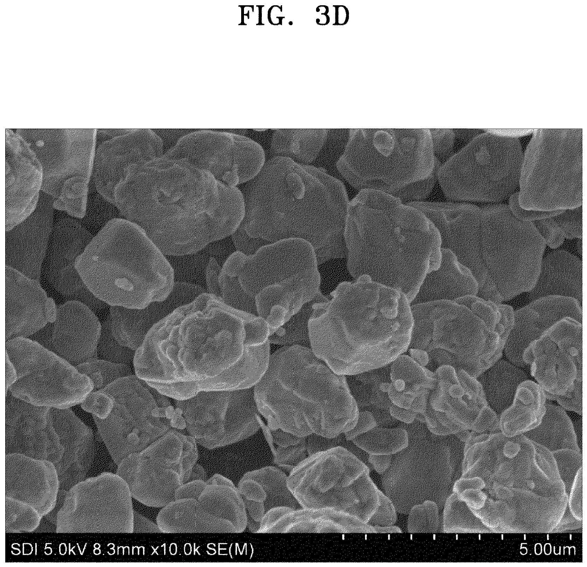

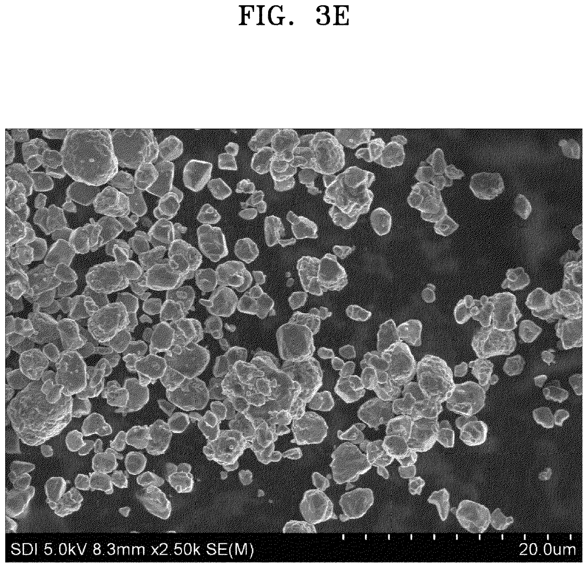

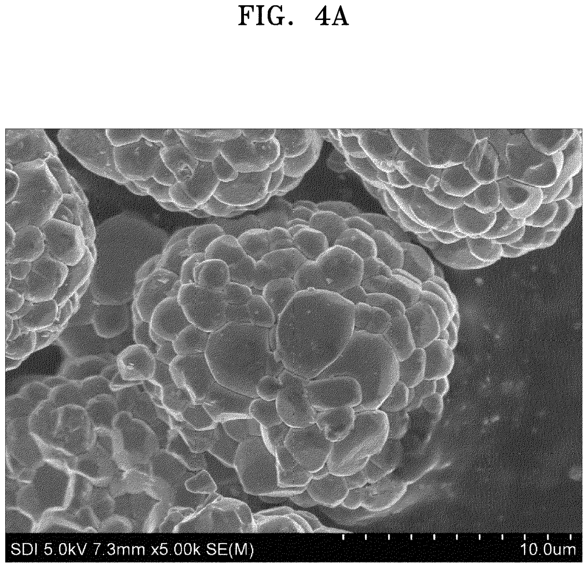

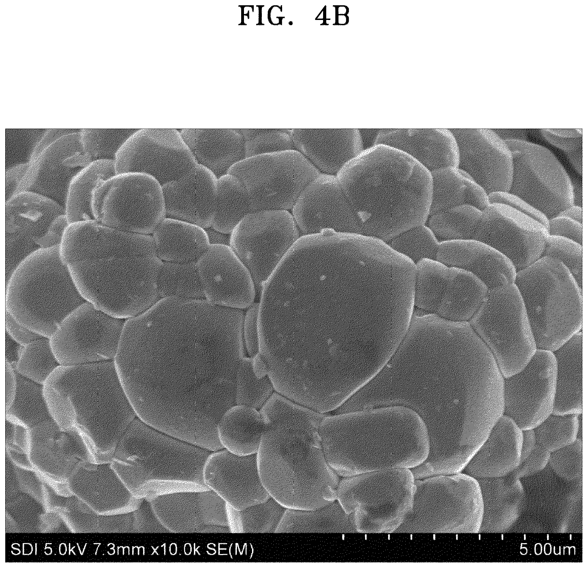

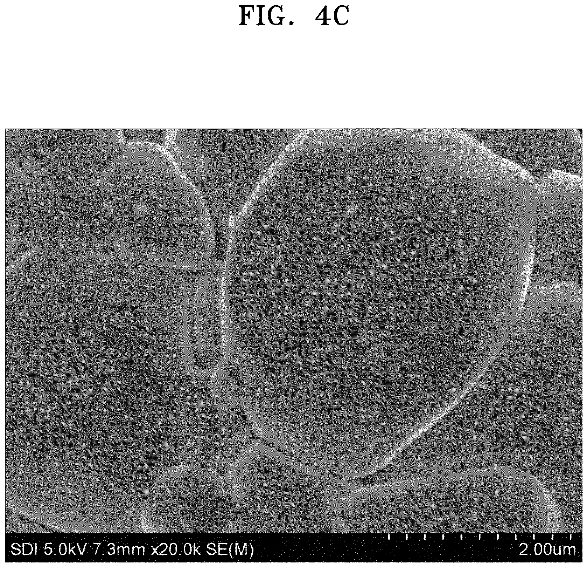

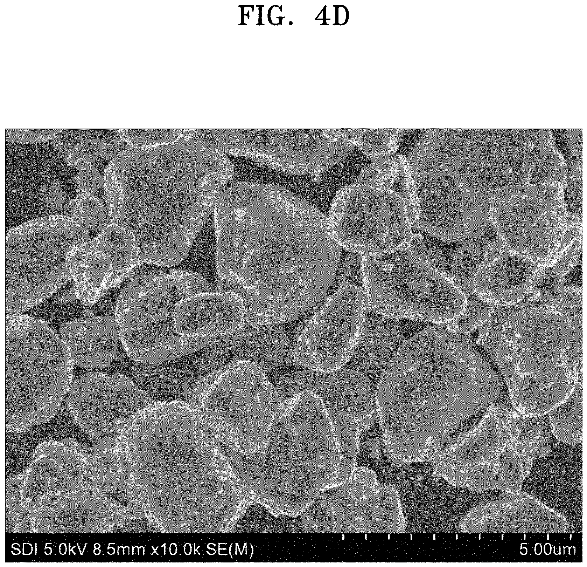

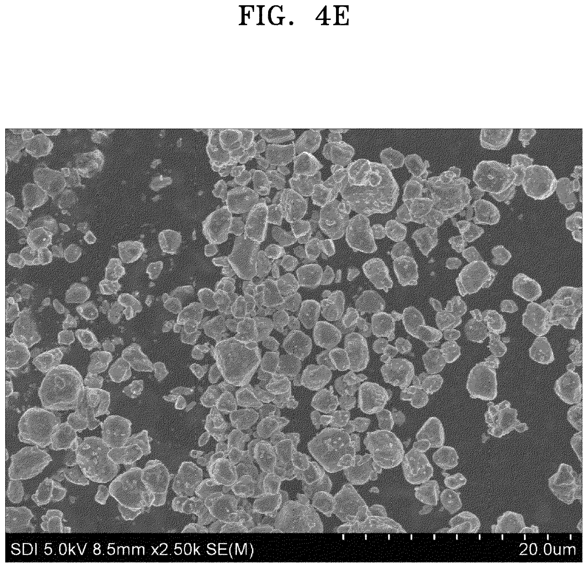

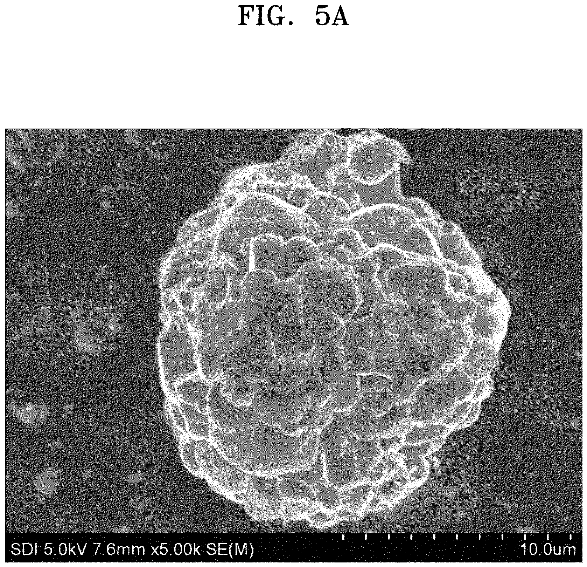

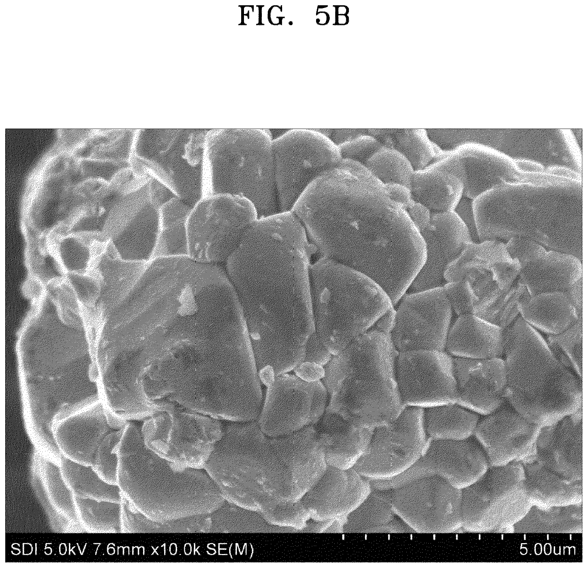

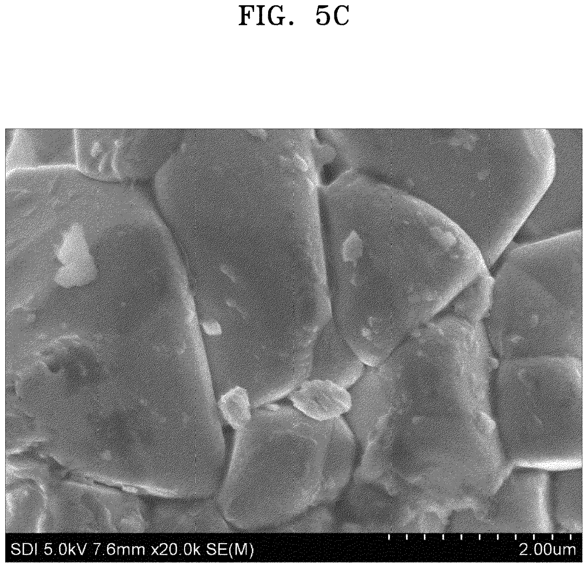

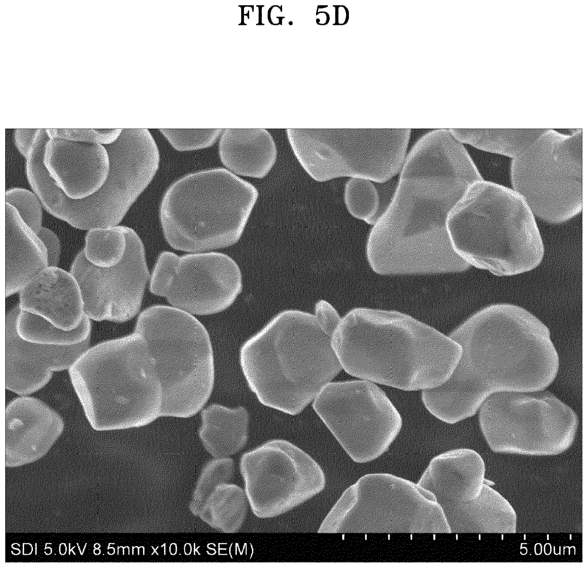

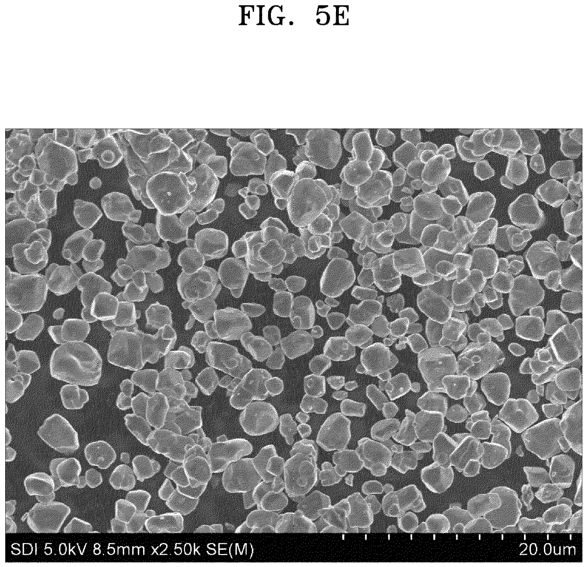

Scanning electron microscopy was performed on the surfaces of secondary particles of the cathode active materials of Examples 1 to 3 and Reference Example 1. A Magellan 400L (FEI company) was utilized as a scanning electron microscope, and the analysis results of the products obtained after the primary heat treatment in preparing the cathode active materials of Examples 1 to 3 and Reference Example 1 are illustrated in FIG. 2A, 2B, 2C, 3A, 3B, 3C, 4A, 4B, 4C, 5A, 5B, and 5C. In addition, the analysis results of the products after the secondary heat treatment in preparing the cathode active materials of Examples 1 to 3 and Reference Example 1 are illustrated in FIGS. 2D, 2E, 3D, 3E, 4D, 4E, 5D, and 5E. In the drawings, FIGS. 2A to 2E illustrate the cathode active material of Example 1, FIGS. 3A to 3E illustrate the cathode active material of Example 2, FIGS. 4A to 4E illustrate the cathode active material of Example 3, and FIGS. 5A to 5E illustrate the cathode active material of Reference Example 1.

As illustrated in FIGS. 2A to 2C, 3A to 3C, 4A to 4C, and 5A to 5C, it was confirmed that large particles having a hollow structure were obtained after the primary heat treatment in all of Examples 1 to 3 and Reference Example 1, and as illustrated in FIGS. 2D and 2E, 3D and 3E, 4D and 4E, and 5D and 5E, it was confirmed that, when the large particles were pulverized into small particles, followed by secondary heat treatment, final small particles were formed (images corresponding to FIGS. 2D, 3D, 4D, and 5D, and FIGS. 2E, 3E, 4E, and 5E).

### Evaluation Example 2: Scanning electron microscopy II

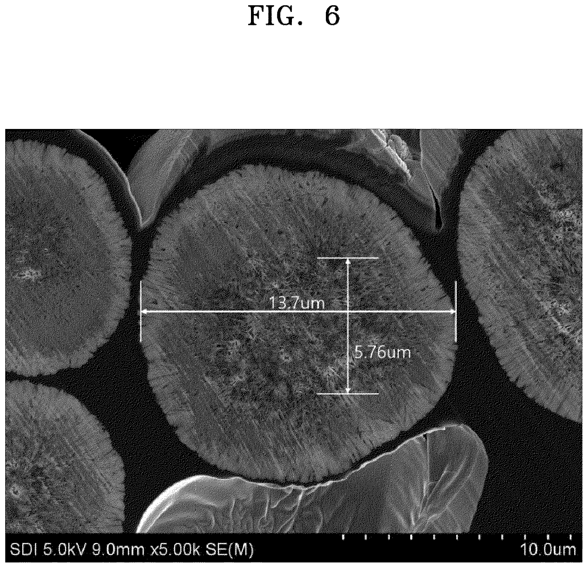

Scanning electron microscopy was performed on the nickel-based metal precursor of Preparation Example 1, and the analysis results thereof are illustrated in FIG. 6.

Referring to FIG. 6, the nickel-based metal precursor of Preparation Example 1 had pores therein and in the form of secondary particles each having a size of 14 µm. The inside pore region with pores had a major axis length of about 5.76 µm, and showed an amorphous structure.

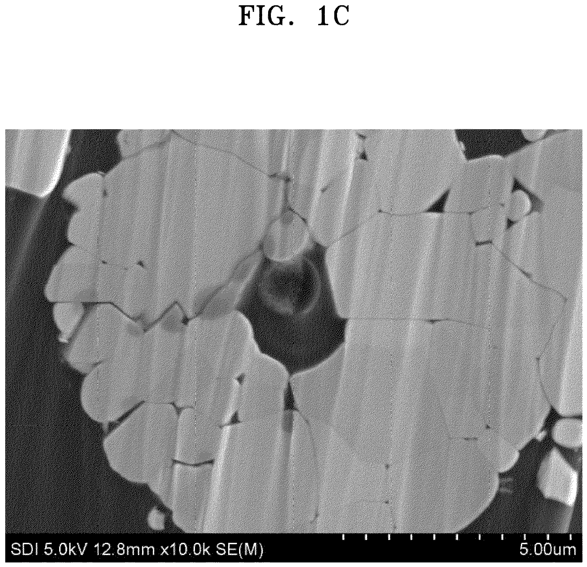

In addition, scanning electron microscopy was performed on the cross-section of the secondary particles of the cathode active material of Example 1. A Magellan 400L (FEI company) was utilized as a scanning electron microscope, and the analysis results thereof are illustrated in FIG. 1C.

FIG. 1C is a scanning electron microscope (SEM) image of the cross-section of a product obtained after primary heat treatment in preparation of the cathode active material of Example 1.

Referring to FIG. 1C, the cathode active material of Example 1 consisted of monolithic particles having (each having) a size (an average size) of 3.0 µm.

### Evaluation Example 3: Particle Size Distribution Characteristics

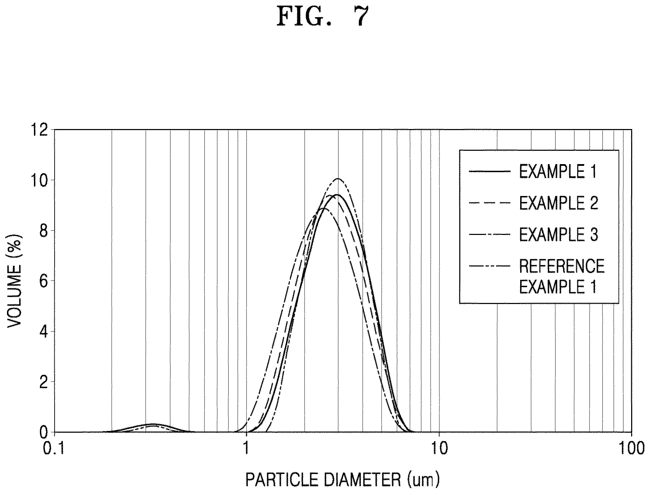

The particle size distribution characteristics of the cathode active materials of Examples 1 to 3 and Reference Example 1 were analyzed utilizing a particle size analyzer (PSA). The analysis results thereof are shown in Table 1 and FIG. 7.

In Table 1, span is denoted as (D90-D10)/D50.

The particle size distribution (PSD) graph may be obtained by the following PSD measurement conditions.

As a laser particle size analyzer, LS13320 (Beckmann Coulter) was utilized, and the analysis conditions were as follows: pump speed (55 %), sample ultrasonic dispersion 40 KHz ultrasonic wave (60 s), run length of 60 s, refractive index ratio Sample RI 1.6, e-factor 1.00, sample amount of 0.20 g, and sample input dispersant: 1 mL of 10% sodium hexametaphosphate (or SHMP).

**Table 1**

| Classification | Mo content (*e.g*., amount) | Powder properties | | | |
|---|---|---|---|---|---|
| | | Particle size distribution (µm) | | | |
| | mol% | D10 | D50 | D90 | Span |
| Example 1 | 0.1 | 1.84 | 3.00 | 4.77 | 0.98 |
| Example 2 | 0.2 | 1.76 | 2.86 | 4.60 | 1.00 |
| Example 3 | 0.4 | 1.50 | 2.56 | 4.22 | 1.06 |
| Reference Example 1 | 0 | 1.90 | 3.01 | 4.63 | 0.91 |

Referring to Table 1 and FIG. 7, it can be confirmed that the cathode active materials of Examples 1 to 3 have a span of less than 1.1 and have a substantially uniform particle size. It can also be confirmed that all of the cathode active materials of Examples 1 to 3 and Reference Example 1 were products having substantially uniform particles, and as the content (*e.g*., amount) of molybdenum (Mo) increased, the size of the cathode active material slightly decreased.

In addition, the average particle diameters of the cathode active materials of Examples 1 to 3 and the cathode active material of Reference Example 1 were analyzed utilizing a scanning electron microscope. The average particle diameter during analysis was determined as the average value of 30 or more randomly extracted (or selected) particles of 1 µm or more excluding differentials, by utilizing a scanning electron microscope.

As a result, the average particle diameters of the cathode active materials of Examples 1 to 3 and the cathode active material of Reference Example 1 exhibited results similar to D50 shown in Table 1.

### Evaluation Example 4: X-ray diffraction analysis

X-ray diffraction analysis was performed on the cathode active materials prepared in Examples 1 to 3 and Reference Example 1 by utilizing X'pert pro (PANalytical) utilizing Cu Kα radiation (1.54056 Å), and the results thereof are shown in Table 2.

In Table 2, FWHM₍₀₀₃₎ refers to the full width at half maximum (FWHM) of a peak corresponding to the (003) plane (a peak at 2θ=about 18-19°), and FWHM₍₁₀₄₎ refers to the FWHM of a peak corresponding to the (104) plane (a peak at 2θ=about 44.5°).

**Table 2**

| Classification | FWHM₍₀₀₃₎(°) | FWHM₍₁₀₄₎(°) | FWHM_{(003)/}FWHM_{( 104)} |
|---|---|---|---|
| Example 1 | 0.0910 | 0.1198 | 0.76 |
| Example 2 | 0.0897 | 0.1226 | 0.73 |
| Example 3 | 0.0932 | 0.1214 | 0.77 |
| Reference Example 1 | 0.0878 | 0.1098 | 0.80 |

From the FWHM₍₀₀₃₎ and FWHM₍₀₀₃₎/FWHM₍₁₀₄₎ characteristics shown in Table 2, the cathode active materials of Examples 1 to 3 were confirmed to be monolithic particles. It was also confirmed that, because the cathode active materials of Examples 1 to 3 were subjected to the secondary heat treatment even though the pulverization process was performed, the cathode active materials exhibited excellent or suitable crystal properties due to little damage to crystals thereof.

It can be confirmed from the above-described FWHM₍₀₀₃₎ and FWHM₍₀₀₃₎/FWHM₍₁₀₄₎ values that the cathode active materials have less crystal damage. The lower FWHM₍₀₀₃₎ refers to that the crystal grains of the active materials grow into a large and substantially uniform crystal structure in the (003) direction, and a higher ratio of FWHM₍₀₀₃₎/FWHM₍₁₀₄₎ means that the crystal grains of the active materials grow into a large and substantially uniform crystal structure in the (104) direction.

As can be seen from Table 2, the cathode active materials of Examples 1 to 3 exhibited excellent or suitable crystallinity similar to that of the cathode active material of Reference Example 1.

### Evaluation Example 5: Residual lithium

The residual lithium characteristics of the cathode active materials of Examples 1 to 3 and Reference Example 1 were evaluated, and the evaluation results thereof are shown in Table 3.

The content (e.g., amount) of residual lithium was measured by the acid-base titration method, and 50 g of each of the prepared active materials was added into a beaker along with 100 mL of ultrapure water, followed by stirring, and the solution and powder were separated from the stirred solution by utilizing filter paper, and then the resulting solution was subjected to pH titration utilizing 0.1 N hydrochloric acid. The contents of lithium hydroxide and lithium carbonate were measured and shown in Table 3.

**Table 3**

| Classification | Mo | Residual lithium | | |
|---|---|---|---|---|
| | mol% | Li₂CO₃ | LiOH | Free Li |
| Example 1 | 0.1 | 0.889 | 0.258 | 2419 |
| Example 2 | 0.2 | 0.832 | 0.397 | 2716 |
| Example 3 | 0.4 | 0.754 | 0.725 | 3521 |
| Reference Example 1 | 0 | 0.797 | 0.223 | 2146 |

From Table 3, it can be seen that the cathode active materials of Examples 1 to 3 have a small content (*e.g*., amount) of residual lithium, similar to the case of Reference Example 1.

### Evaluation Example 6: Room temperature charge/discharge characteristics

In the coin cells manufactured according to Manufacture Examples 1 to 3 and Reference Manufacture Examples 1 and 2, charge/discharge characteristics and/or the like were evaluated utilizing a charger (manufacturer: TOYO, model: TOYO-3100).

In the 1^{st} charge-discharge cycle, each coin cell was charged at a constant current of 0.1 C at 25 °C until the voltage reached 4.2 V, and was then charged at a constant voltage until the current reached 0.05 C. After a rest period of about 10 minutes, the completely charged cell was discharged at a constant current of 0.1 C until the voltage reached 3V.

In the 2^{nd} charge/discharge cycle, each coin cell was charged at a constant current of 0.2 C until the voltage reached 4.25V, and then charged at a constant voltage until the current reached 0.05 C. After a rest period of about 10 minutes, the charged cell was discharged at a constant current of 0.2 C until the voltage reached 3 V.

For lifespan evaluation, each coin cell was charged at a constant current of 1 C until the voltage reached 4.25 V, and then charged at a constant voltage until the current reached 0.05 C. After a rest period of about 10 minutes, the completely charged cell was discharged at a constant current of 1 C until the voltage reached 3 V, and this cycle of charging and discharging was repeated 50 times for evaluation.

The charge/discharge efficiency was calculated by Equation 1. Charge/discharge efficiency = [discharge capacity at 0.2 C/charge capacity at 0.2 C] x 100

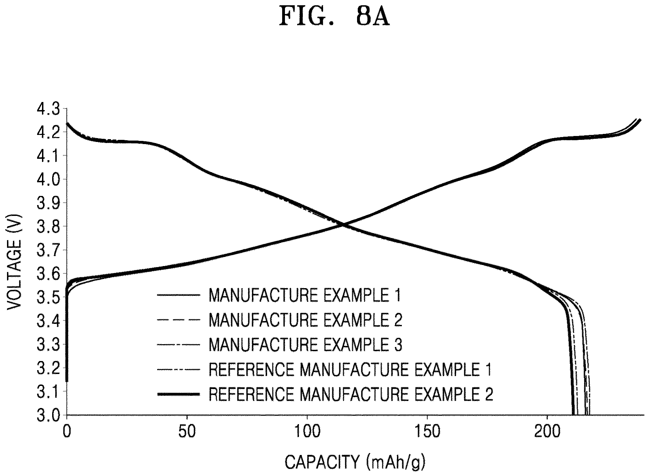

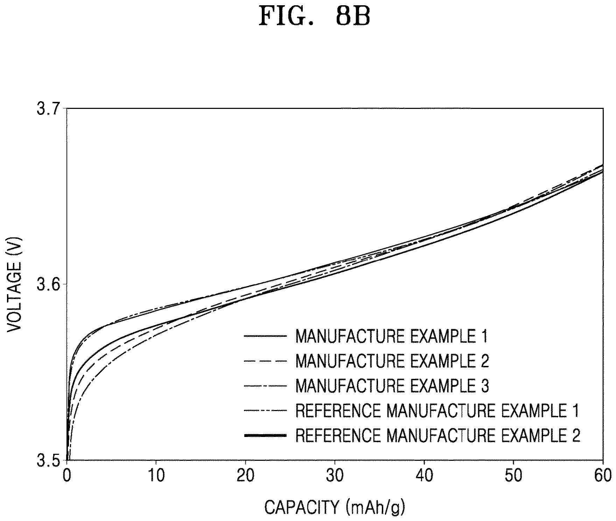

The above-described charge/discharge efficiency was evaluated and the evaluation results thereof are shown in Table 4, changes in capacity according to voltage were investigated and the results thereof are shown in FIG. 8A, and differences in resistance during initial charging were investigated and the results thereof are shown in FIG. 8B.

**Table 4**

| Classification | Charging at 0.2 C(mAh/g) | Discharging at 0.2 C(mAh/g) | Charge/dischar ge efficiency (%) |
|---|---|---|---|
| Manufacture Example 1 | 238.08 | 215.97 | 90.7 |
| Manufacture Example 2 | 237.94 | 216.99 | 91.2 |
| Manufacture Example 3 | 237.17 | 217.86 | 91.9 |
| Reference Manufacture Example 1 | 236.91 | 212.47 | 89.7 |
| Reference Manufacture Example 2 | 238.90 | 210.74 | 88.2 |

Referring to Table 4 and FIGS. 8A-8B, it can be seen that the coin cells manufactured according to Manufacture Examples 1 to 3 have enhanced charge/discharge efficiency compared to the case of Reference Manufacture Examples 1 and 2.

### Evaluation Example 7: High-temperature charge/discharge characteristics

In the coin cells manufactured according to Manufacture Examples 1 to 3, charge/discharge characteristics and/or the like were evaluated utilizing a charger (manufacturer: TOYO, model: TOYO-3100).

In the 1^{st} charge-discharge cycle, each coin cell was charged at a constant current of 0.1 C at 45 °C until the voltage reached 4.3 V, and was then charged at a constant voltage until the current reached 0.05 C. After a rest period of about 10 minutes, the completely charged cell was discharged at a constant current of 0.1 C until the voltage reached 3V.

In the 2^{nd} charge/discharge cycle, each coin cell was charged at a constant current of 0.2 C until the voltage reached 4.3 V, and then charged at a constant voltage until the current reached 0.05 C. After a rest period of about 10 minutes, the completely charged cell was discharged at a constant current of 0.2 C until the voltage reached 3 V.

For lifespan evaluation, each coin cell was charged at a constant current of 1 C until the voltage reached 4.3 V, and then charged at a constant voltage until the current reached 0.05 C. After a rest period of about 10 minutes, the completely charged cell was discharged at a constant current of 1 C until the voltage reached 3 V, and this cycle of charging and discharging was repeated 50 times for evaluation.

A capacity retention ratio (CRR) was calculated by Equation 2. Capacity retention ratio [%] = [discharge capacity at 50th cycle/discharge capacity at 1st cycle] x 100

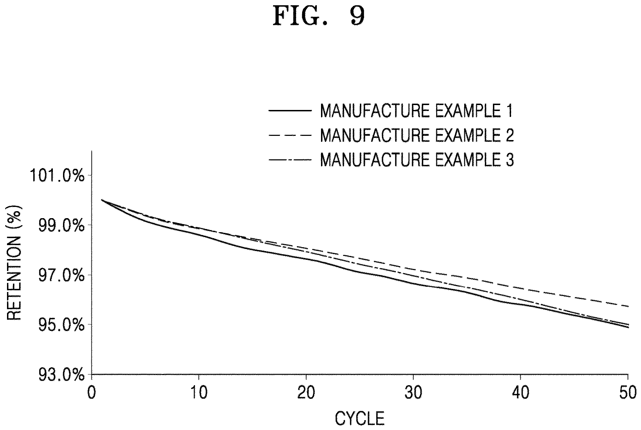

Referring to FIG. 9, the coin cells manufactured according to Manufacture Examples 1 to 3 exhibited excellent capacity retention ratios.

While one or more embodiments have been described with reference to the drawings and the examples, these are merely for illustrative purposes, and it will be understood by those of ordinary skill in the art that one or more suitable changes and other embodiments equivalent thereto can be made therefrom. Therefore, the scope of the disclosure should be defined by the appended claims and equivalents thereof.

As is apparent from the foregoing description, when a cathode active material for a lithium secondary battery according to one or more embodiments is utilized, it may be possible to prepare a nickel-based active material for a lithium secondary battery, having suppressed or reduced aggregation between particles, improved productivity, and a reduced mixing ratio of cations, and thus exhibiting enhanced capacity characteristics. A lithium secondary battery manufactured utilizing such a nickel-based active material for a lithium secondary battery has enhanced discharge capacity and charge/discharge efficiency.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "About", "substantially," or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this disclosure is intended to include all higher numerical limitations subsumed therein. Accordingly, Applicant reserves the right to amend this disclosure, including the claims, to expressly recite any sub-range subsumed within the ranges expressly recited herein.

As used herein, the singular forms "a", "an" and "the" are intended to include the plural forms as well, unless the context clearly indicates otherwise.

The portable device, vehicle, and/or the battery, e.g., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

The present invention may be defined by reference to the following clauses:
Clause 1. A cathode active material for a lithium secondary battery, comprising:
   nickel-based lithium metal oxide monolithic particles, the monolithic particles having a size of about 1 µm to about 4 µm; and
   a cobalt compound-containing coating layer disposed on surfaces of the nickel-based lithium metal oxide monolithic particles,
   wherein the nickel-based lithium metal oxide monolithic particles are doped with molybdenum.
Clause 2. The cathode active material of clause 1, wherein a content of the molybdenum is in a range of at least about 0.1 mol% but less than about 1.0 mol% with respect to 100 mol% of a total content of metals other than lithium in the cathode active material.
Clause 3. The cathode active material of clause 1 or clause 2, wherein an amount of a cobalt compound in the cobalt compound-containing coating layer is in a range of about 0.1 mol% to about 5.0 mol% with respect to a total amount of the cathode active material.
Clause 4. The cathode active material of any one of clauses 1 to 3, wherein the cobalt compound-containing coating layer has a thickness of about 1 nm to about 50 nm.
Clause 5. The cathode active material of any one of clauses 1 to 4, wherein a cobalt compound in the cobalt compound-containing coating layer comprises cobalt oxide, lithium cobalt oxide, or a combination thereof.
Clause 6. The cathode active material of clause 5, wherein the cobalt compound-containing coating layer further comprises at least one selected from boron, manganese, phosphorus, aluminium, zinc, zirconium, and titanium.
Clause 7. The cathode active material of any one of clauses 1 to 6, wherein the nickel-based lithium metal oxide monolithic particles is a compound represented by Formula 1:

   Formula 1 Liₐ(Ni_{1-x-y}M1ₓM2_{y})O_{2±α1}

   wherein, in Formula 1, M1 is at least one element selected from Co, Mn, and Al,
   M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.95≤a≤1.1, 0.6≤(1-x-y)<1, 0≤x<0.4, 0≤y<0.4, and 0≤α1≤0.1, wherein a case where both x and y are 0 at the same time is excluded.
Clause 8. The cathode active material of any one of clauses 1 to 6, wherein the nickel-based lithium metal oxide monolithic particles is a compound represented by Formula 2:

   Formula 2 Liₐ(Ni_{1-x-y-z}CoₓM3_{y}M4_{z})O_{2±α1}

   wherein, in Formula 2, M3 is at least one element selected from Mn and Al,
   M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.95≤a≤1.1, 0.6≤(1-x-y-z)<1, 0≤x<0.4, 0≤y<0.4, 0≤z<0.4, and 0≤α1≤0.1, wherein a case where all of x, y, and z are 0 at the same time is excluded.
Clause 9. The cathode active material of any one of clauses 1 to 8, wherein FWHM_{(003)/}FWHM₍₁₀₄₎ of the cathode active material, as measured by X-ray diffraction analysis, is in a range of about 0.72 to about 0.79.
Clause 10. A method of preparing a cathode active material for a lithium secondary battery, the method comprising:
   mixing a nickel precursor, at least one selected from an M1 precursor and an M2 precursor, and a basic solution to obtain a mixture, and subjecting the mixture to a coprecipitation reaction, followed by drying, to obtain a nickel-based metal precursor having pores therein;
   obtaining a mixture of the nickel-based metal precursor having pores therein and a lithium precursor;
   adding a molybdenum precursor to the mixture of the nickel-based metal precursor and the lithium precursor, and subjecting the resulting mixture to primary heat treatment;
   subjecting a product of the primary heat treatment to a pulverization process to obtain a product in the form of small monolithic particles; and
   adding a cobalt precursor to the product in the form of small monolithic particles to obtain a mixture, and subjecting the mixture of the colbalt precursor and the product in the form of small monolithic particles to secondary heat treatment,
   wherein the primary heat treatment is performed at a higher temperature than the secondary heat treatment,
   the M1 precursor is at least one selected from a cobalt precursor, a manganese precursor, and an aluminium precursor, and
   the M2 precursor is a precursor containing at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr).
Clause 11. The method of clause 10, wherein a pore region inside the nickel-based metal precursor has a size of about 2 µm to about 7 µm.
Clause 12. The method of clause 10 or clause 11, wherein the cobalt precursor comprises Co(OH)₂, CoOOH, CoO, Co₂O₃, Co₃O₄, Co(OCOCH₃)₂·4H₂O, CoCl₂, Co(NO₃)₂·6H₂O, CoSO₄, Co(SO₄)₂·7H₂O, or a combination thereof.
Clause 13. The method of any one of clauses 10 to 12, wherein the nickel-based metal precursor is a compound represented by Formula 3, a compound represented by Formula 4, or a combination thereof:

   Formula 3 (Ni_{1-x-y}M1ₓM2_{y})(OH)₂

   wherein, in Formula 3, M1 is at least one element selected from Co, Mn, and Al,
   M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.6≤(1-x-y)<1, 0≤x<0.4, and 0≤y<0.4, wherein a case where both x and y are 0 at the same time is excluded,

   Formula 4 (Ni_{1-x-y}M1ₓM2_{y})O

   wherein, in Formula 4, M1 is at least one element selected from Co, Mn, and Al,
   M2 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.6≤(1-x-y)<1, 0≤x<0.4, and 0≤y<0.4, wherein a case where both x and y are 0 at the same time is excluded.
Clause 14. The method of any one of clauses 10 to 12, wherein the nickel-based metal precursor is a compound of Formula 5, a compound of Formula 6, or a combination thereof:

   Formula 5 Ni_{1-x-y-z}CoₓM3_{y}M4_{z}(OH)₂

   wherein, in Formula 5, M3 is at least one element selected from Mn and Al,
   M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.6≤(1-x-y-z)<1, 0≤x<0.4, 0≤y<0.4, and 0≤z<0.4, wherein a case where all of x, y, and z are 0 at the same time is excluded,

   Formula 6 (Ni_{1-x-y-z}CoₓM3_{y}M4_{z})O

   wherein, in Formula 6, M3 is at least one element selected from Mn and Al,
   M4 is at least one element selected from boron (B), magnesium (Mg), calcium (Ca), strontium (Sr), barium (Ba), titanium (Ti), vanadium (V), chromium (Cr), iron (Fe), copper (Cu), and zirconium (Zr), and
   0.6≤(1-x-y-z)<1, 0≤x<0.4, 0≤y<0.4, and 0≤z<0.4, wherein a case where all of x, y, and z are 0 at the same time is excluded.
Clause 15. The method of any one of clauses 10 to 14, wherein the nickel-based metal precursor and the lithium precursor are mixed such that a molar ratio of Li/Me (a metal other than Li) is at least about 0.9 but less than about 1.1.
Clause 16. The method of any one of clauses 10 to 15, wherein the lithium precursor comprises lithium hydroxide, lithium carbonate, lithium sulfate, lithium nitrate, or a combination thereof.
Clause 17. The method of any one of clauses 10 to 16, wherein the primary heat treatment is performed at about 800 °C to about 1200 °C in an oxidizing gas atmosphere.
Clause 18. The method of any one of clauses 10 to 17, wherein the secondary heat treatment is performed at about 600 °C to about 850 °C in an oxidizing gas atmosphere.
Clause 19. A cathode for a lithium secondary battery, comprising:
   a cathode current collector; and
   a cathode active material layer on the cathode current collector,
   wherein the cathode active material layer comprises the cathode active material of any one of clauses 1 to 9.
Clause 20. A lithium secondary battery comprising:
   the cathode of clause 19;
   an anode; and
   an electrolyte between the cathode and the anode.

## Claims

1. A cathode active material for a lithium secondary battery, the cathode active material comprising:
nickel-based lithium metal oxide monolithic particles, the nickel-based lithium metal oxide monolithic particles having an average size of about 1 µm to about 4 µm; and
a cobalt compound-containing coating layer on surfaces of the nickel-based lithium metal oxide monolithic particles,
wherein the nickel-based lithium metal oxide monolithic particles are doped with molybdenum.

2. The cathode active material of claim 1, wherein an amount of the molybdenum is in a range of at least about 0.1 mol% and at most about 1.0 mol% with respect to a total amount of metals other than lithium in the cathode active material.

3. The cathode active material of claim 1 or claim 2, wherein an amount of a cobalt compound in the cobalt compound-containing coating layer is in a range of about 0.1 mol% to about 5.0 mol% with respect to a total amount of the cathode active material.

4. The cathode active material of any one of claims 1 to 3, wherein the cobalt compound-containing coating layer has a thickness of about 1 nm to about 50 nm.

5. The cathode active material of any one of claims 1 to 4, wherein a cobalt compound in the cobalt compound-containing coating layer comprises cobalt oxide, lithium cobalt oxide, or a combination thereof
optionally wherein the cobalt compound-containing coating layer further comprises at least one selected from among boron, manganese, phosphorus, aluminium, zinc, zirconium, and titanium.

6. The cathode active material of any one of claims 1 to 5, wherein
(i) the nickel-based lithium metal oxide monolithic particles are a compound represented by Formula 1:
Formula 1 Liₐ(Ni_{1-x-y}M1ₓM2_{y})O_{2±α1}
wherein, in Formula 1, M1 is at least one element selected from among Co, Mn, and Al,
M2 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.95≤a≤1.1, 0.6≤(1-x-y)<1, 0≤x<0.4, 0≤y<0.4, and 0≤α1≤0.1, and
wherein a case where both x and y are 0 at the same time is excluded; or
(ii) the nickel-based lithium metal oxide monolithic particles are a compound represented by Formula 2:
Formula 2 Liₐ(Ni_{1-x-y-z}CoₓM3_{y}M4_{z})O_{2±α1}
wherein, in Formula 2, M3 is at least one element selected from among Mn and Al,
M4 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.95≤a≤1.1, 0.6≤(1-x-y-z)<1, 0≤x<0.4, 0≤y<0.4, 0≤z<0.4, and 0≤α1≤0.1, and wherein a case where all of x, y, and z are 0 at the same time is excluded.

7. The cathode active material of any one of claims 1 to 6, wherein FWHM_{(003)/}FWHM₍₁₀₄₎ of the cathode active material, as measured by X-ray diffraction analysis, is in a range of about 0.72 to about 0.79.

8. A method of preparing a cathode active material for a lithium secondary battery, the method comprising:
mixing a nickel precursor, at least one selected from among an M1 precursor and an M2 precursor, and a basic solution to obtain a first mixture, and coprecipitating the first mixture in a coprecipitation reaction, followed by drying, to obtain a nickel-based metal precursor having a pore region with pores therein;
mixing the nickel-based metal precursor having the pore region with the pores therein and a lithium precursor to obtain a second mixture;
adding a molybdenum precursor to the second mixture and heating the second mixture with a primary heat treatment to obtain a first product;
pulverizing the first product utilizing a pulverization process to obtain a second product in a form of small monolithic particles; and
adding a cobalt precursor to the second product to obtain a third mixture, and heating the third mixture with a secondary heat treatment,
wherein the primary heat treatment is performed at higher temperature than the secondary heat treatment,
the M1 precursor is at least one selected from among a cobalt precursor, a manganese precursor, and an aluminium precursor, and
the M2 precursor is a precursor containing at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr).

9. The method of claim 8, wherein the pore region inside the nickel-based metal precursor has a size of about 2 µm to about 7 µm.

10. The method of claim 8 or claim 9, wherein the cobalt precursor comprises Co(OH)₂, CoOOH, CoO, Co₂O₃, Co₃O₄, Co(OCOCH₃)₂·4H₂O, CoCl₂, Co(NO₃)₂·6H₂O, CoSO₄, Co(SO₄)₂·7H₂O, or a combination thereof.

11. The method of any one of claims 8 to 10, wherein:
(i) the nickel-based metal precursor is a compound represented by Formula 3, a compound represented by Formula 4, or a combination thereof:
Formula 3 (Ni_{1-x-y}M1ₓM2_{y})(OH)₂
wherein, in Formula 3, M1 is at least one element selected from among Co, Mn, and Al,
M2 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.6≤(1-x-y)<1, 0≤x<0.4, and 0≤y<0.4, wherein a case where both x and y are 0 at the same time is excluded,
Formula 4 (Ni_{1-x-y}M1ₓM2_{y})O
wherein, in Formula 4, M1 is at least one element selected from among Co, Mn, and Al,
M2 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.6≤(1-x-y)<1, 0≤x<0.4, and 0≤y<0.4, and
wherein a case where both x and y are 0 at the same time is excluded; or
(ii) the nickel-based metal precursor is a compound of Formula 5, a compound of Formula 6, or a combination thereof:
Formula 5 Ni_{1-x-y-z}CoₓM3_{y}M4_{z}(OH)₂
wherein, in Formula 5, M3 is at least one element selected from among Mn and Al,
M4 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.6≤(1-x-y-z)<1, 0≤x<0.4, 0≤y<0.4, and 0≤z<0.4,
wherein a case where all of x, y, and z are 0 at the same time is excluded,
Formula 6 (Ni_{1-x-y-z}CoₓM3_{y}M4_{z})O
wherein, in Formula 6, M3 is at least one element selected from among Mn and Al,
M4 is at least one element selected from among boron (B), magnesium (Mg), calcium (Ca), strontium (Sr), barium (Ba), titanium (Ti), vanadium (V), chromium (Cr), iron (Fe), copper (Cu), and zirconium (Zr), and
0.6≤(1-x-y-z)<1, 0≤x<0.4, 0≤y<0.4, and 0≤z<0.4, and
wherein a case where all of x, y, and z are 0 at the same time is excluded.

12. The method of any one of claims 8 to 11, wherein the nickel-based metal precursor and the lithium precursor are mixed such that a molar ratio of Li/Me (a metal other than Li) is at least about 0.9 and at most about 1.1.

13. The method of any one of claims 8 to 12, wherein:
(i) the lithium precursor comprises lithium hydroxide, lithium carbonate, lithium sulfate, lithium nitrate, or a combination thereof; and/or
(ii) the primary heat treatment is performed at about 800 °C to about 1200 °C in an oxidizing gas atmosphere; and/or
(iii) the secondary heat treatment is performed at about 600 °C to about 850 °C in an oxidizing gas atmosphere.

14. A cathode for a lithium secondary battery, comprising:
a cathode current collector; and
a cathode active material layer on the cathode current collector,
wherein the cathode active material layer comprises the cathode active material of any one of claims 1 to 7.

15. A lithium secondary battery comprising:
the cathode of claim 14;
an anode; and
an electrolyte between the cathode and the anode.
